# EUROPEAN PATENT APPLICATION

(11) **EP 1 785 880 A1**
(43) Date of publication of application: **16.05.2007**
(21) Application number: 05755192.1
(22) Date of filing: 24.06.2005
(51) Int. Cl.: G06F 13/00, G06F 12/00, H04M 11/00

(54) **INFORMATION SERVICE SYSTEM, INFORMATION SERVER, PORTABLE TERMINAL, INFORMATION SERVICE CONTROL PROGRAM AND PORTABLE TERMINAL CONTROL PROGRAM**

(30) Priority: 24.06.2004 JP 2004186279; 22.06.2005 JP 2005181818
(71) Applicant: NEC CORPORATION, Minato-ku, Tokyo 108-8001 (JP)
(72) Inventor: YOSHIKAWA, Masato, NEC CORPORATION, Tokyo 1088001 (JP)
(74) Representative: Wenzel & Kalkoff
(86) International application number: PCT/JP2005/012148
(87) International publication number: WO 2006/001507

(57) **Abstract**

An information supply system in which in response to a request for information from a portable terminal (20) connected through a network (50), an information supply server (10) supplies the portable terminal (20) with the requested information, which system collates information requested by the portable terminal (20) with transmitted information which is held in the information supply server (10) to determine whether the information requested by the portable terminal (20) is already transmitted or not, thereby suppressing re-transmission of the information.

## Description

### Field of the Invention

The present invention relates to a technique for supplying information, and more particularly, an information supply system, an information supply server, a portable terminal, an information supply control program and a portable terminal control program which suppress re-transmission of information already held in a portable terminal when supplying information from an information supply server to the portable terminal.

### Description of the Related Art

As functions of portable terminals are improved, there will be more chances of downloading of a file from a server which provides information into a portable terminal through a network. Under such a condition as the number of files is rapidly increased, it is expected to receive another transfer of a file already held in a portable terminal. In such a case, in addition to a time loss incurred in downloading an unnecessary file, problem will occur for a portable terminal that an unnecessary file should be deleted later. Other problem is that holding files in duplicate further consumes a storage capacity of a portable terminal whose capacity is originally small.

Examples of a method that solves such problems are recited in, for example, Japanese Patent Laying-Open No. 2003-281024 (Literature 1) and Japanese Patent-Laying Open No. 2002-91731 (Literature 2).

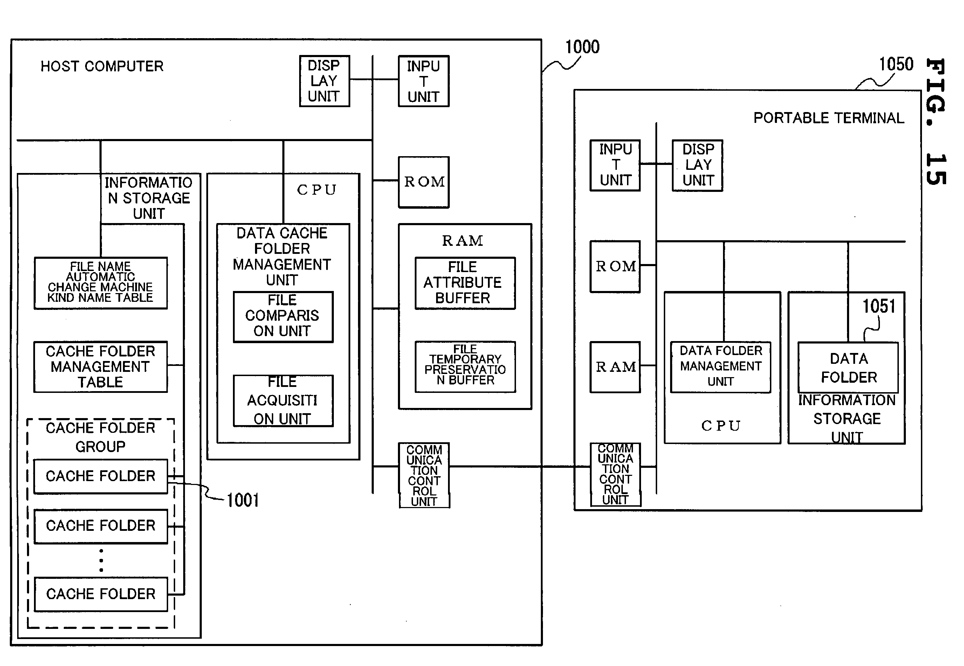

In the method disclosed in Literature 1, a host computer 1000 first requests file information held in a data holder 1051 of a portable terminal from the portable terminal and obtains the same as shown in Fig. 15. On the other hand, the host computer 1000 obtains, from a cache holder 1001 in the host computer provided for each terminal which is generated separately, file information which has been already transferred form a portable terminal 1050. Next, the host computer 1000 compares the file information obtained from the portable terminal 1050 and the file information obtained from the cache folder 1001, specifies a file not recorded in the cache folder 1001 and requests only the specified file from the portable terminal. The portable terminal transfers the requested file from the data folder 1051 to the host computer 1000.

In the method recited in Literature 2, which relates to transfer of a file from a computer to a printer, a printer driver in the computer downloads all the printing range excluding image data in data whose printing is first requested. Then, the printer driver determines a link destination in hyper-link format data and when determining to print the same image data a plurality of times, transfers information to that effect to the printer together with a file of the image data. The printer caches the file image data file on a storage element. In this state, upon receiving a printing instruction, the printer prints by using the image data file cached at a part of the link of the image data.

The above-described conventional techniques have the problems set forth in the following.

In the method of Literature 1, when receiving transfer of a file from the portable terminal, the host computer obtains file information whose transfer is to be first received from the portable terminal and after comparing the information with file information which has been already transferred, receives transfer of a file yet to be transferred.

While a file is transferred from the portable terminal to the host computer in the method of Literature 1, the host computer in this case is not allowed to comprehend what file the portable terminal holds, so that file information should be all the time provided from the portable terminal at the time of reception of transfer.

On the other hand, when applying this method to the problem here, that is, a case of downloading a file from a server to the portable terminal through a network, the portable terminal will be supplied information from the server. Since the portable terminal requires a cache folder which holds a file of the server, a portable terminal having a small storage capacity needs to have a mechanism for holding a large volume of files held in the server, resulting in significantly increasing loads of the portable terminal.

Thus, it is difficult to apply the method of Literature 1 to a case of downloading a file from the server to the portable terminal through the network, which method of Literature 1 is originally a method executed in a case of transferring information from a plurality of portable terminals to a host computer and is not a method executed in a case of conversely transferring information from the host computer to a plurality of portable terminals.

The method in Literature 2, which is a method of printing data including image data whose volume of data is large by a computer, aims at reducing a transfer time by, when printing the same image data a plurality of times, caching the image data in advance in a storage of a printer and at the time of printing data, printing the image data cached in the printer without transferring the image data from the computer a plurality of times.

Although the method in Literature 2 is effective in reducing a printing time in a case where one data to be printed includes a plurality of pieces of the same image data, it is not a solution to the problem here, that is, that a plurality of pieces of the same data supplied from a server are held in a portable terminal.

An object of the present invention is to eliminate the shortcomings of the above-described conventional art and to realize an information supply system, an information supply server, a portable terminal, an information supply control program and a portable terminal control program which suppress re-transmission of information already held in a portable terminal at the time of supply of information from a server to the portable terminal.

### SUMMARY OF THE INVENTION

The present invention for achieving the above-described object is an information supply system in which, in response to a request for information made by a portable terminal connected through a network, an information supply server supplies the portable terminal with the requested information, which system collates information requested by the portable terminal with already transmitted information which is held in the information supply server to determine whether the information requested by the portable terminal is already transmitted or not, thereby suppressing re-transmission of the information.

An information supply system according to claim 2 of the present invention includes a cache unit which holds the information already transmitted and identification information for identifying the relevant information so as to be correlated with each other, in which identification information of information requested by the portable terminal is collated with identification information in the cache unit to determine whether the information is already transmitted or not.

In an information supply system according to claim 3 of the present invention, only identification information of the information is transmitted from the information supply server to the portable terminal and when determining that the information is yet to be transmitted, the information and the identification information of the relevant information are transmitted from the information supply server to the portable terminal.

In an information supply system according to claim 4 of the present invention, a cache unit is provided in the portable terminal which holds information received from the information supply server and identification information of the relevant information so as to be correlated with each other, as well as reading the information upon receiving only the identification information of the information from the information supply server.

In an information supply system according to claim 5 of the present invention, when receiving only the identification information from the information supply server, upon provision of only the relevant identification information to a service supply unit which supplies an output interface of the portable terminal with information, the service supply unit obtains information corresponding to the identification information from the cache unit and when receiving the information and identification information of the relevant information from the information supply server, only the relevant identification information is supplied to the service supply unit and the relevant information and the identification information of the relevant information are held in the cache unit, and the service supply unit obtains information corresponding to the identification information from the cache unit.

In an information supply system according to claim 6 of the present invention, upon reception of a request for updated information corresponding to the transmitted information, the information supply server is connected to obtain updated information and identification information of the relevant information from a data server which supplies information corresponding to the request and when the updated information and information corresponding to identification information of the updated information which is held in the cache unit fail to coincide with each other, the information held in the cache unit is rewritten by the updated information and the updated information and identification information are transmitted to the portable terminal.

In an information supply system according to claim 7 of the present invention, upon reception of the updated information and the identification information transmitted from the information supply server at the portable terminal, when information corresponding to the same identification information as the identification information is held in the cache unit provided in the portable terminal, the information is rewritten by the updated information.

In an information supply system according to claim 8 of the present invention, when storage capacity information of a cache unit provided in the information supply server is transmitted to the portable terminal, the portable terminal sets a storage capacity of the cache unit provided in the portable terminal based on the storage capacity information.

In an information supply system according to claim 9 of the present invention, when information held in the cache unit is updated through an input interface of the portable terminal, an updating flag indicative of being updated is applied to the information and after the information and identification information are transmitted to the information supply server, the updating flag is deleted.

In an information supply system according to claim 10 of the present invention, when the cache unit has no free region for holding information, information and identification information held in the first region of the cache unit are deleted, information and identification information of the relevant information in the second and the following regions are moved to make the first region be at the top and new information and identification information of the relevant information are held in an information holding region in the rear, when information of the cache unit is deleted, information and identification information in subsequent regions following a region in which the deleted information is held are moved to make the subsequent region be the region where the deleted information is held, and when new information is added to the cache unit, new information and identification information are held subsequently to the information in the rear.

In an information supply system according to claim 11 of the present invention, when upon a request for information from the portable terminal, information of the cache unit corresponding to the identification information is referred to, information and identification information in subsequent regions following a region in which the referred information is held are moved to make the subsequent region be the region where the referred information is held and the referred information and identification information are held in an information holding region in the rear.

In an information supply system according to claim 12 of the present invention, when the information held in the cache unit is rewritten by the updated information, information and identification information of the relevant information in subsequent regions following a region in which the updated information is held are moved to make the subsequent region be the region where the updated information is held and the updated information and identification information are held in an information holding region in the rear.

In an information supply system according to claim 13 of the present invention, among information and identification information of the relevant information transmitted from the information supply server to the portable terminal, after the information is hashed by the information supply server by using a hash function, the hashed information is held in the cache unit together with its identification information.

In an information supply system according to claim 14 of the present invention, when information to be transmitted to the portable terminal is made into a hash, if information which is hashed and which corresponds to the same identification information as identification information of the information is already held in
the cache unit, the information made into a hash and the hashed information are compared and,when the pieces of the information disagree with each other, the hashed information which is held in the cache unit is rewritten into the information made into a hash.

In an information supply system according to claim 15 of the present invention, in addition to information and identification information of the relevant information, its corresponding information updating time is obtained by the information supply server from the data server connected to the information supply server and after the information and the identification information of the relevant information are transmitted from the information supply server to the portable terminal, the identification information of the information and the information updating time are held in the cache unit so as to be collated with each other.

In an information supply system according to claim 16 of the present invention, at the time of obtaining the information updating time, when the same identification information as identification information of the information is held in the cache unit and an information updating time corresponding to the identification information of the information and an information updating time corresponding to the same identification information fail to coincide with each other, the information and the identification information of the relevant information are transmitted to the portable terminal.

An information supply system according to claim 17 of the present invention is an information supply system with a portable terminal and an information supply server which supplies the portable terminal with information connected through a network and with the information supply server being connected to a plurality of data servers, the information supply server, upon reception of an information supply request from the portable terminal, obtaining information and identification information of the relevant information from any of the plurality of data servers and supplying the portable terminal with the information and the identification information of the relevant information, in which system when identification information for identifying information service to be used and information request contents as an information item for selecting information to be received are transmitted from the portable terminal to the information supply server, the information supply server selects one data server from among the plurality of data servers based on the identification information, and the information supply server receives, from the data base, a supply of information corresponding to the information request contents of the information sent from the portable terminal.

In an information supply system according to claim 18 of the present invention, the information supply server includes a cache unit which holds the information already transmitted, and collates information requested by the portable terminal with information of the cache unit to determine whether the information is already transmitted or not.

In an information supply system according to claim 19 of the present invention, at the time of the collation, difference information as information for generating data based on transmitted data and a flag for determining whether transmitted information is difference information or not are generated by the information supply server and, when determination is made that the requested information is yet to be transmitted, the difference information and the flag are transmitted from the information supply server, and when determination is made that the requested information is already transmitted, the flag is transmitted from the information supply server.

In an information supply system according to claim 20 of the present invention, for each of a plurality of companies, a data server and a portable terminal belonging to the relevant company are provided, and provided in the information supply server is an allotment control unit which, when the portable terminal receives supply of information stored in the data server from the information supply server, allots the requested information to each company and makes a request to the data server of each company holding the portable terminal.

In an information supply system according to claim 21 of the present invention, for each of a plurality of companies, a data server is provided, and a traffic counting management unit is provided which, when the portable terminal receives supply of information of each company stored in the data server from the information supply server, counts traffic use conditions of each company using the portable terminal to calculate using charges of the portable terminal for each company.

In an information supply system according to claim 22 of the present invention, when only identification information of the information is received from the information supply server and the relevant identification information fails to be held in the cache unit provided in the portable terminal, upon a request for information corresponding to the relevant identification information made from the portable terminal to the information supply server, the information is read from the cache unit provided in the information supply server and the information and identification information of the relevant information are transmitted to the portable terminal.

An information supply server according to claim 23 of the present invention is an information supply server which is connected to a portable terminal and a data server for supplying information corresponding to the request through a network and which in response to a request for information from the portable terminal obtains information from the data server to supply the portable terminal with the requested information, which information supply server collates transmitted information which is held and information requested by the portable terminal to determine whether the information requested by the portable terminal is already transmitted or not, thereby suppressing re-transmission of the information.

An information supply server according to claim 24 of the present invention includes a cache unit which holds the information already transmitted and identification information for identifying the relevant information so as to be correlated with each other, in which identification information of information requested by the portable terminal is collated with identification information of the cache unit to determine whether the information is already transmitted or not.

An information supply server according to claim 25 of the present invention which, when determining that the information is already transmitted, transmits only identification information of the information to the portable terminal, and when determining that the information is yet to be transmitted, transmits the information and identification information of the relevant information to the portable terminal.

In an information supply server according to claim 26 of the present invention, upon reception of a request for updated information corresponding to transmitted information, a re-transmission suppression control unit for obtaining updated information and identification information of the relevant information from the data server to suppress re-transmission of information, compares updated information and information corresponding to identification information of the updated information which is held in the cache unit and, when the pieces of the information fail to coincide with each other, rewrites the information held in the cache unit by the updated information and transmits the updated information and identification information to the portable terminal.

An information supply server according to claim 27 of the present invention, which transmits storage capacity information of the cache unit to the portable terminal.

In an information supply server according to claim 28 of the present invention, when the cache unit has no free region for holding information, information and identification information held in the first region of the cache unit are deleted, information and identification information of the relevant information in the second and the following regions are moved to make the first region be at the top and new information and identification information of the relevant information are held in an information holding region in the rear, when information of the cache unit is deleted, information and identification information in subsequent regions following a region in which the deleted information is held are moved to make the subsequent region be the region where the deleted information is held, and when new information is added to the cache unit, new information and identification information are held subsequently to the information in the rear.

In an information supply server according to claim 29 of the present invention, when identification information of information requested by the portable terminal is correlated with identification information of the cache unit and information in the cache unit corresponding to the identification information is referred to, information and identification information in subsequent regions following a region in which the referred information is held are moved to make the subsequent region be the region where the referred information is held and the referred information and identification information are held in an information holding region in the rear.

In an information supply server according to claim 30 of the present invention, when the information held in the cache unit is rewritten by the updated information, information and identification information of the relevant information in subsequent regions following a region in which the updated information is held are moved to make the subsequent region be the region where the updated information is held and the updated information and identification information are held in an information holding region in the rear.

In an information supply server according to claim 31 of the present invention, among information and identification information of the relevant information transmitted to the portable terminal, after the information is hashed by the information supply server by using a hash function, the hashed information is held in the cache unit together with its identification information.

In an information supply server according to claim 32 of the present invention, when information to be transmitted to the portable terminal is made into a hash, if information which is hashed and which corresponds to the same identification information of identification information of the information is already held in the cache unit, the information made into a hash and the hashed information are compared and, when the pieces of the information disagree with each other, the hashed information which is held in the cache unit is rewritten into the information made into a hash.

An information supply server according to claim 33 of the present invention, which obtains in addition to information and identification information of the relevant information, its corresponding information updating time from the information server and, when transmitting the information and the identification information of the relevant information to the portable terminal, holds the identification information of the information and the information updating time in the cache unit provided in the information supply server.

An information supply server according to claim 34 of the present invention, which, at the time of obtaining the information updating time, when the same identification information as identification information of the information is held in the cache unit and an information updating time corresponding to the identification information of the information and an information updating time corresponding to the same identification information fail to coincide with each other, transmits the information and the identification information of the relevant information to the portable terminal.

A portable terminal according to claim 35 of the present invention is a portable terminal which is connected to an information supply server through a network and which, when making a request for information to the information supply server, receives supply of the requested information, which portable terminal includes a cache unit that holds information received from the information supply server and identification information for identifying the relevant information so as to be correlated with each other and upon reception of only the identification information of the information from the information supply server, reads the information.

In a portable terminal according to claim 36 of the present invention, upon reception of only the identification information from the information supply server, only the relevant identification information is supplied to a service supply unit which supplies an output interface with information, and upon reception of information and identification information of the relevant information, only the relevant identification information is supplied to the service supply unit and the relevant information and the identification information of the relevant information are held in the cache unit.

In a portable terminal according to claim 37 of the present invention, upon reception of only the identification information, the service supply unit requests information corresponding to the identification information from a re-reception suppression control unit which suppresses re-reception of information and the re-reception suppression control unit obtains information corresponding to the identification information from the cache unit and supplies the information to the service supply unit, and upon reception of the information and identification information of the relevant information, the service supply unit requests information corresponding to the identification information from the re-reception suppression control unit and the re-reception suppression control unit obtains information corresponding to the identification information from the cache unit and supplies the information to the service supply unit.

In a portable terminal according to claim 38 of the present invention, upon reception of updated information corresponding to the received information and identification information of the relevant information, when information corresponding to the same identification information as the identification information is held in the cache unit, the information is rewritten by the updated information.

In a portable terminal according to claim 39 of the present invention, upon reception of storage capacity information of the cache unit from the information supply server, a storage capacity of the cache unit is set based on the storage capacity information.

In a portable terminal according to claim 40 of the present invention, when information held in the cache unit is updated through an input interface, an updating flag indicative of being updated is applied to the updated information and, after the information and identification information of the relevant information are transmitted to the information supply server, the updating flag is deleted.

An information supply control program according to claim 41 of the present invention, which is to be executed on an information supply server connected to a portable terminal and a data server through a network and in response to a request for information from the portable terminal, obtains information from the data server to supply the portable terminal with the requested information, which program executes the function of determining whether information requested by the portable terminal is already transmitted or not by collating transmitted information in a cache unit which holds transmitted information and identification information of the relevant information so as to be correlated with each other and the information requested by the portable terminal.

An information supply control program according to claim 42 of the present invention, which includes the function of, when determination is made that information is already transmitted, transmitting only identification information of the information to the portable terminal, and when determination is made that the information is yet to be transmitted, transmitting the information and identification information of the relevant information to the portable terminal.

An information supply control program according to claim 43 of the present invention, which includes the function of upon reception of a request for updated information corresponding to transmitted information, obtaining updated information and identification information of the relevant information from the data server and comparing the updated information and information corresponding to identification information of the updated information which is held in the cache unit and when they fail to coincide with each other, rewriting the information held in the cache unit by the updated information and transmitting the updated information and identification information to the portable terminal.

An information supply control program according to claim 44 of the present invention, which includes the function of transmitting storage capacity information of the cache unit to the portable terminal.

An information supply control program according to claim 45 of the present invention, which includes the function of, among information and identification information of the relevant information transmitted to the portable terminal, after hashing the information by using a hash function, holding the hashed information in the cache unit together with identification information of the relevant information.

With an information supply control program according to claim 46 of the present invention, when information to be transmitted to the portable terminal is made into a hash, if information which is hashed and which corresponds to the same identification information as identification information of the information is already held in the cache unit, the information made into a hash and the hashed information are compared and when the pieces of information disagree with each other, the hashed information which is held in the cache unit is rewritten into the information made into a hash.

A portable terminal control program according to claim 47 of the present invention which is to be executed on a portable terminal connected to an information supply server through a network and having a cache unit which in response to a request for information made to the information supply server, receives supply of the requested information to hold the received information and identification information for identifying the relevant information so as to be correlated with each other, which program executes the function of, upon reception of only identification information from the information supply server, supplying only the relevant identification information to a service supply unit which supplies an output interface with information, and the function of, upon reception of information and identification information of the relevant information, providing the service supply unit with only the relevant identification information.

A portable terminal control program according to claim 48 of the present invention, which includes the function of, upon reception of only the identification information, obtaining information corresponding to the identification information held in the cache unit, and upon reception of the information and identification information of the relevant information, obtaining information corresponding to the identification information from the cache unit and supplying the information to the service supply unit.

A portable terminal control program according to claim 49, which includes the function of, upon reception of updated information corresponding to the received information and identification information of the relevant information, when information corresponding to the same identification information as the identification information is held in the cache unit, rewriting the information by the updated information.

### BRIEF DESCRIPTION OF THE DRAWINGS

Fig. 1 is a block diagram showing structure of an information supply system according to a first embodiment of the present invention;
Fig. 2 is a diagram showing arrangement of a data packet in the first embodiment of the present invention;
Fig. 3 is a schematic diagram for use in explaining a flow of processing executed after input of a request by a user in the first embodiment of the present invention;
Fig. 4 is a flow chart showing processing of a service supply unit of an information supply server for use in explaining the first embodiment of the present invention;
Fig. 5 is a flow chart showing processing of a re-transmission suppression control unit of the information supply server for use in explaining the first embodiment of the present invention;
Fig. 6 is a flow chart showing processing of a re-reception suppression control unit of a portable terminal for use in explaining the first embodiment of the present invention;
Fig. 7 is a flow chart showing processing of a service supply unit of the portable terminal in the first embodiment of the present invention;
Fig. 8 is a diagram for use in explaining how disagreement is prevented at the time of data update in the first embodiment of the present invention;
Fig. 9 is a diagram for use in explaining a second embodiment of the present invention;
Fig. 10 is a diagram showing data holding of a transmission history data cache unit for use in explaining a third embodiment of the present invention;
Fig. 11 is a diagram showing data holding of the transmission history data cache unit for use in explaining the third embodiment of the present invention;
Fig. 12 is a diagram for use in explaining a fourth embodiment of the present invention;
Fig. 13 is a diagram for use in explaining a fifth embodiment of the present invention;
Fig. 14 is a diagram for use in explaining a sixth embodiment of the present invention;
Fig. 15 is a diagram for use in explaining background art;
Fig. 16 is a diagram for use in explaining a seventh embodiment of the present invention;
Fig. 17 a diagram for use in explaining an eighth embodiment of the present invention;
Fig. 18 is a diagram for use in explaining a ninth embodiment of the present invention;
Fig. 19 is a diagram for use in explaining a tenth embodiment of the present invention;

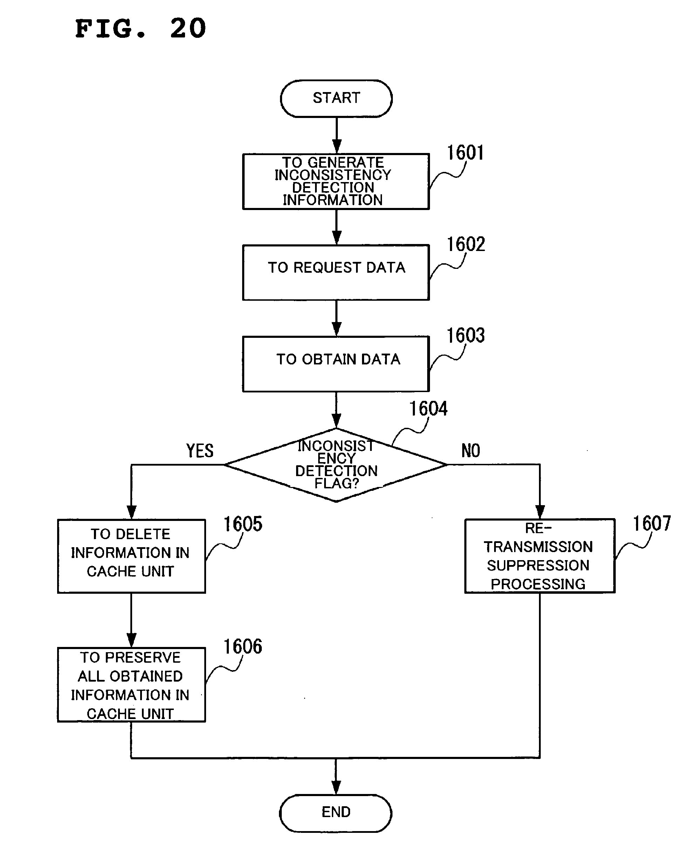

Fig. 20 is a flow chart showing processing of the re-reception suppression control unit of the portable terminal for use in explaining an eleventh embodiment of the present invention;

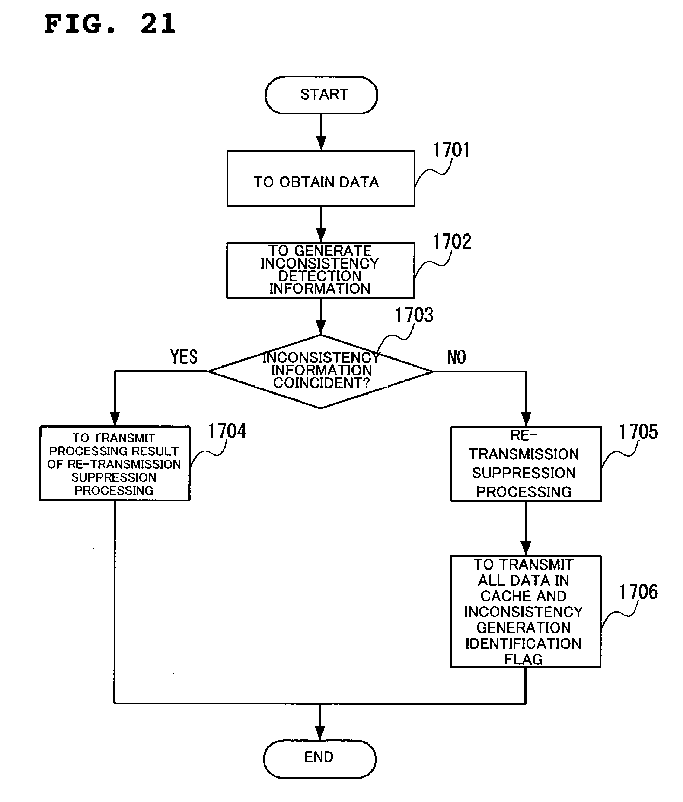

Fig. 21 is a flow chart showing processing of the re-transmission suppression control unit of the information supply server for use in explaining the eleventh embodiment of the present invention;

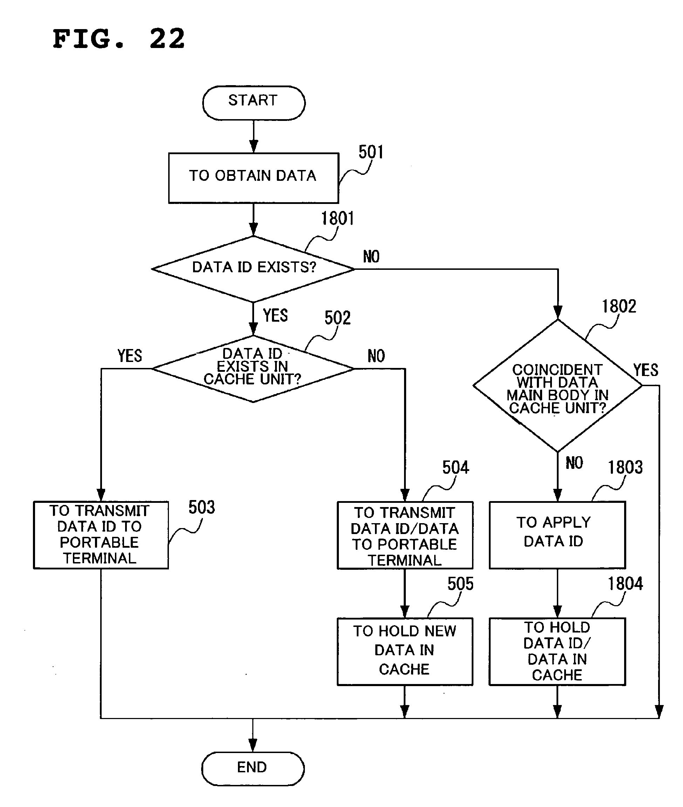

Fig. 22 is a flow chart showing processing of the re-transmission suppression control unit of the information supply server for use in explaining a twelfth embodiment of the present invention; and

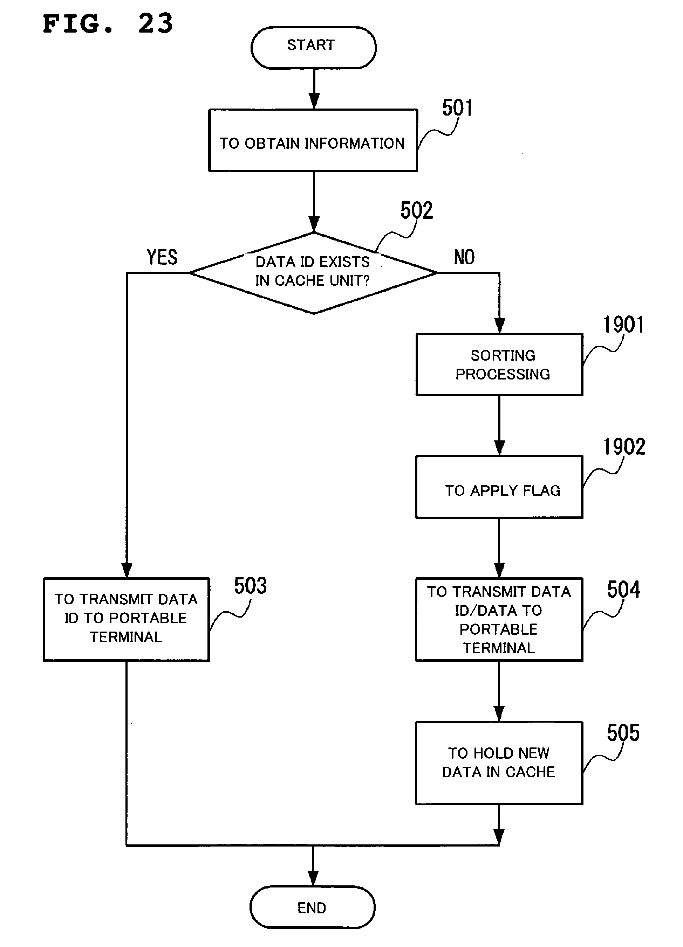

Fig. 23 is a flow chart showing processing of the re-transmission suppression control unit of the information supply server for use in explaining a thirteenth embodiment of the present invention.

### DESCRIPTION OF THE PREFERRED EMBODIMENT

In the following, embodiments of the present invention will be described in detail with reference to the drawings.

### [FIRST EMBODIMENT]

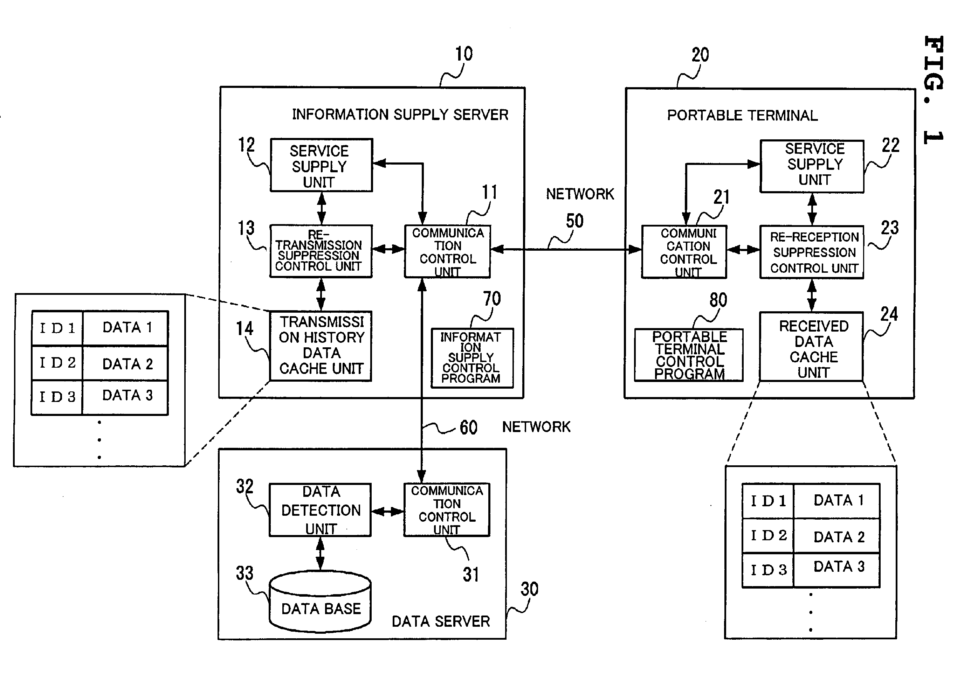

Fig. 1 is a block diagram showing structure of an information supply system according to a first embodiment.

With reference to Fig. 1, an information supply server 10 in the first embodiment is connected to a portable terminal 20 through a network 50. In response to a request for information from the portable terminal 20, the information supply server 10 supplies the portable terminal 20 with the information requested by the information supply server 10. In this case, transmission of information and identification information of the relevant information is executed by transmission of data obtained by processing the information. In the following, information will be referred to as data and identification information as ID except when particularly required.

The information supply server 10 is further connected to a data server 30 through a network 60. Although in the figure, the portable terminal 20, the information supply server 10 and the data server 30 are provided one each, they may be provided in plurality.

The portable terminal 20 in the present embodiment includes a key pad or a keyboard as an input interface used by a user and a monitor enabling drawing of characters and images as an output interface. Among examples of a portable terminal are a cellular phone, a PDA (Personal Digital Assistant) and a notebook computer.

The portable terminal 20 includes a service supply unit 22 for receiving input from a user or supplying information in response to input, a communication control unit 21 for executing communication with an externally connected apparatus, a re-reception suppression control unit 23 which has a function of suppressing re-reception of data of the same contents and processes information received from the information supply server 10, and a received data cache unit 24 for holding information supplied from the information supply server 10.

The service supply unit 22 of the portable terminal 20 supplies a user with service through an output interface. Service denoted here includes service of requesting information from an externally connected server or the like so that a user refers to the obtained information. Among examples of such service are telephone directory service for confirming a telephone number of an employee of a company and scheduler for referring to a schedule of a superior officer.

The information supply server 10 is capable of supplying the portable terminal 20 with information upon a request received from the portable terminal 20. Among examples of the information supply server 10 are a corporate server, a Web server, and a server owned by an application service provider.

The information supply server 10 includes a communication control unit 11 for receiving a request from the portable terminal 20, a service supply unit 12 for issuing a request, a re-transmission suppression control unit 13 having a function of suppressing re-transmission of information, and a transmission history data cache unit 14 for holding data to be transmitted and its ID as history information.

The service supply unit 12 is capable of confirming a request received from the portable terminal 20 to make a request for data to the data server 30.

The re-transmission suppression control unit 13 is capable of determining whether information received from the data server 30 is information already transmitted to the portable terminal or not.

The transmission history data cache unit 14 is capable of holding, upon an information supply request from the portable terminal 20, data obtained by the service supply unit 12 from the data server 30 and transmitted to the portable terminal 20 so as to be correlated with ID. These data and ID are held as transmitted information.

Shown in the figure is a case where three data holding regions have data, with ID including ID1, ID2 and ID3 in which three data, data 1, data 2 and data 3 are held. In one data holding region, one data and its ID are held.

In addition, the same data is held also in the received data cache unit 24 of the portable terminal 20. The portable terminal 20 allows data received from the information supply server 10 to be held in the received data cache unit 24 so as to be correlated with an ID.

The data in the transmission history data cache unit 14 and the data in the received data cache unit 24 are maintained the same except when data is updated.

These data can be read by designating its ID. In a case of the portable terminal 20, for example, when the service supply unit 22 makes a data request to the re-reception suppression control unit 23 with an ID as a key item, the re-reception suppression control unit 23 obtains the ID and data corresponding thereto from the received data cache unit 24 and supplies the same to the service supply unit 22.

The data server 30 includes a communication control unit 31 as an interface with an external apparatus, a data detection unit 32 for receiving a request from the information supply server 10 to detect information adapted to the request from a data base 33, and the data base 33 in which various kinds of information are stored. When a request for supplying information is made by the portable terminal 20 to the information supply server 10, the data server 30 supplies data corresponding to the information and its ID to the information supply server 10.

Although in Fig. 1, the data server 30 is assumed to be a server independent of the information supply server 10, the data server 30 may be included in the information supply server 10. For example, in place of the data server 30, a data base disposed in the information supply server 10 may be used.

Next, operation of the above described first embodiment will be described in details with reference to the drawings.

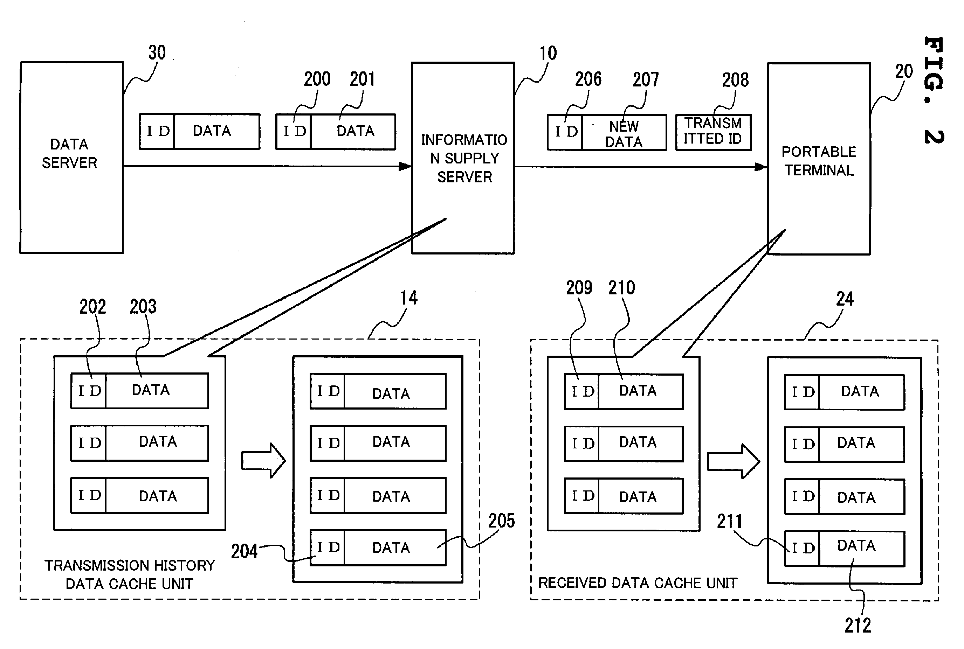

Fig. 2 is a diagram showing arrangement of a data packet in the present embodiment. Main parts of Fig. 1 will be referred to as required.

With reference to Fig. 2, the transmission history data cache unit 14 of the information supply server 10 first holds three data in three data holding regions. When the portable terminal 20 makes a request to the information supply server 10 for supplying information, the information supply server 10 makes an information request to the data server 30, so that data 201 and its ID200 are transmitted from the data server 30.

In the transmission history data cache unit 14, the data 201 and its ID200 to be transmitted to the portable terminal 20 are held as data 205 and an ID204 of transmission history.

The transmission history data cache unit 14 simultaneously transmits the data 205 and the ID204 to the portable terminal 20 as data 207 and an ID206.

Upon receiving the data 207, the portable terminal 20 holds the data as received data 212 and an ID211 in the received data cache unit 24.

The transmission history data cache unit 14 and the received data cache unit 24 hold the same data except when data is updated.

Service provided by the service supply unit 22 of the portable terminal 20 to a user includes, in addition to services provided through an input interface and an output interface, service of enabling a user to issue a request to the externally connected information supply server 10 and receive information in response to the request to refer to the information.

Examples of such service are service for referring to information in a telephone directory by employees in a company and service for confirming a schedule. In the service of providing a telephone directory reference function, for example, a request will be made by entering a last name or a full name of a person to be looked for, while in confirming a schedule, a request will be made by entering a name of a person and time and date to be referred to. The request is made by user's confirming an output interface provided by the service supply unit 22 and selecting from the same and inputting an item to be referred to through an input interface.

In the following, a flow of processing executed after a request is input by a user will be described. First, the processing will be outlined and then detailed description will be made of the processing.

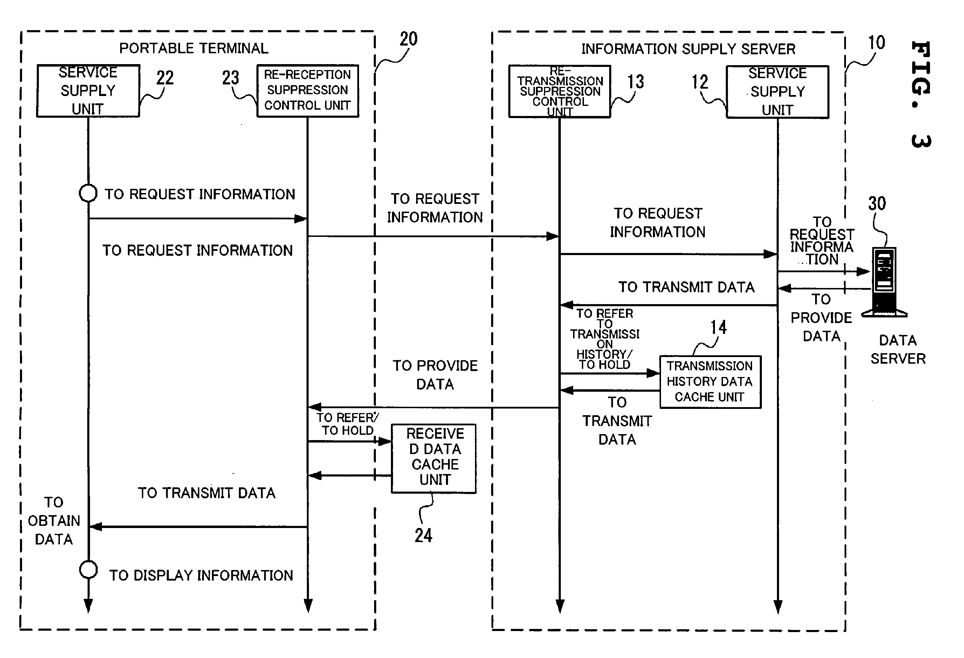

Fig. 3 is a schematic diagram for use in explaining the flow of the processing executed after a user inputs an information request in the present embodiment.

With reference to Fig. 3, an information request applied to the service supply unit 22 of the portable 20 is received by the re-transmission suppression control unit 13 of the information supply server 10 through the re-reception suppression control unit 23. Then, through the service supply unit 12, the information request is received by the data server 30.

The data server 30 searches data corresponding to the requested information to transmit the data and its ID to the service supply unit 12 of the information supply server 10. The service supply unit 12 transmits the data to the re-transmission suppression control unit 13. Next, the re-transmission suppression control unit 13 transmits the data to the transmission history data cache unit 14. Here, since there exists none of the same ID as that of the requested data, it is held in the transmission history data cache unit 14.

Next, the re-transmission suppression control unit 13 transmits the requested data to the portable terminal 20. In the portable terminal 20, the data is received by the re-reception suppression control unit 23 and held in the received data cache unit 24.

Lastly, the re-reception suppression control unit 23 supplies the service supply unit 22 with the data and the service supply unit 22 supplies the user with information through an output interface.

The foregoing is the outline of the description of the processing executed after a request is input by a user.

Next, the processing will be detailed, prior to which detailed description, a method of determining whether it is new information or not by the information supply server 10 will be described in brief.

Main parts of Fig. 1 will be referred to as required.

First, the service supply unit 22 of the portable terminal 20 confirms completion of input by the user. Next, from the service supply unit 22, the information applied through the communication control unit 21 and information for identifying service being used are transmitted as an information request to the information supply server 10.

The information request from the portable terminal 20 is obtained at the service supply unit 12 through the communication control unit 11 and the re-transmission suppression control unit 13 of the information supply server 10.

The information supply server 10 having obtained the information request from the portable terminal 20 issues an information request to the data server 30 which holds information through the re-transmission suppression control unit 13. The information request is sent to the data server 30 from the re-transmission suppression control unit 13 through the communication control unit 11.

The data server 30 receives the information request at the data detection unit 32 through the communication control unit 31 and the data detection unit 32 executes search processing with selection by the user and the input information as a search key to obtain necessary data form the data server 30. The obtained data is formed of the data 201 and the ID200 which information is transmitted through the communication control unit 31.

The re-transmission suppression control unit 13 of the information supply server 10 having obtained the data and its ID from the data server 30 determines whether the received information is already transmitted to the portable terminal 20 by referring to the data of the transmission history data cache unit 14 as will be described in the following.

The determination is made by comparing the ID assigned to the data obtained from the data server 30 and an ID of the information already held in the transmission history data cache unit 14.

As a result of the comparison by the re-transmission suppression control unit 13, when the ID obtained from the data server 30 and the ID of the information already held in the transmission history data cache unit 14 fail to coincide with each other and the ID assigned to the received data fails to exist in the transmission history data cache unit 14, which means that the information is new information, determination will be made that it is yet to be transmitted to the portable terminal 20.

On the other hand, when the same ID as the ID obtained from the data server 30 exists in the transmission history data cache unit 14, determination will be made that the information is already transmitted to the portable terminal 20.

As a result of the determination, the re-transmission suppression control unit 13 transmits, as to information determined to be new, its data and its ID and as to information determined to be information already transmitted, transmits its ID only, to the portable terminal 20 through the communication control unit 11.

The re-transmission suppression control unit 13 holds, in the transmission history data cache unit 14, only data determined to be new information and its ID among the data received from the data server 30.

As described in the foregoing, by collating information requested by the portable terminal 20 with information already transmitted which is held by the information supply server 10 to determine whether the information requested by the portable terminal is already transmitted or not, thereby suppressing re-transmission of the information.

Determination whether information is already transmitted or not is made by collating identification information of data requested by the portable terminal 20 with identification information of the transmission history data cache unit 14.

When the determination results in determining that information is already transmitted, only an ID of the data is transmitted from the information supply server 10 to the portable terminal 20 and when determining that it is yet to be transmitted, the data and its ID are transmitted from the information supply server 10 to the portable terminal 20.

The foregoing is the brief description of the method of determining whether it is new information or not by the information supply server 10.

Next, the processing will be detailed.

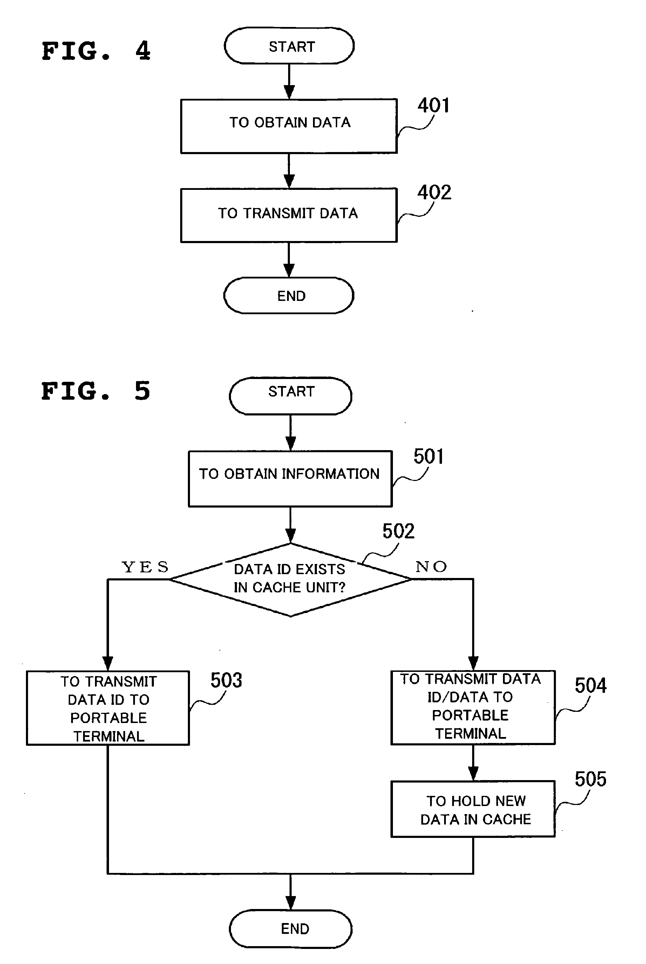

Fig. 4 is a flow chart showing processing of the service supply unit 12 disposed in the information supply server 10 for explaining the present embodiment. The description will be made with reference to the main part of Fig. 1 as required.

With reference to Fig. 4, when the data 201 and the ID200 are obtained from the data server 30 (Step 401), the data is transmitted from the service supply unit 12 to the re-transmission suppression control unit 13 (Step 402).

Fig. 5 is a flow chart showing processing of the re-transmission suppression control unit 13 of the information supply server 10 for explaining the embodiment of the present invention. The following description will be made with reference to the main parts of Fig. 1 and Fig. 2 as required.

With reference to Fig. 5, the re-transmission suppression control unit 13 having obtained the data (Step 501) executes processing of confirming whether there exists the same ID as the ID200 in the transmission history data cache unit 14 (Step 502).

As a result of the confirmation, when the same ID exists in the transmission history data cache unit 14, determination is made that the information is already transmitted to execute processing of transmitting only its ID as an transmitted ID208 toward the portable terminal 20 (Step 503).

On the other hand, when the same ID fails to exist in the transmission history data cache unit 14, the re-transmission suppression control unit 13 executes processing of transmitting the data 206 and the ID 207 toward the portable terminal 20 as new data (Step 504).

The re-transmission suppression control unit 13 simultaneously holds the data as the data 205 and the ID204 in the transmission history data cache unit 14 (Step 505).

The transmitted ID208 or the data 207 and the ID206 as new data is sent from the re-transmission suppression control unit 13 to the portable terminal 20 through the communication control unit 11.

Thus, as to data determined at the re-transmission suppression control unit 13 to have been already transmitted to the portable terminal 20, transmission of only the transmitted ID208 enables further reduction in traffic as compared with a case where the ID is transmitted together with the data.

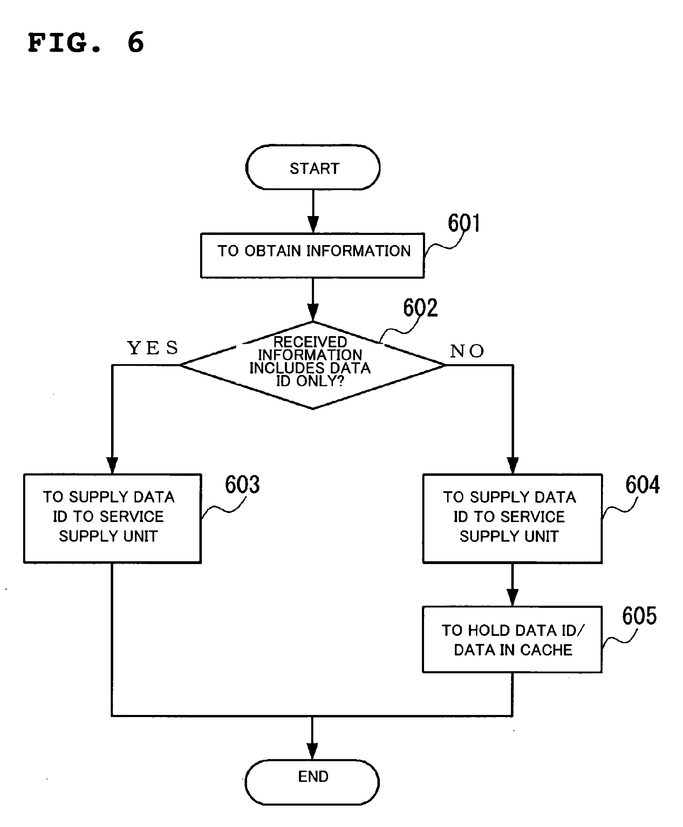

Fig. 6 is a flow chart showing processing of the re-reception suppression control unit 23 of the portable terminal 20 for use in explaining the embodiment of the present invention. In the following description, the main parts of Fig. 1 and Fig. 2 will be referred to as required.

In the portable terminal 20, the transmitted ID208 or information formed of the new data 206 and the ID207 is obtained at the re-reception suppression control unit 23 through the communication control unit 21 (Step 601).

The re-reception suppression control unit 23 checks whether the obtained information is formed only of an ID (Step 602) and when the information is the transmitted ID208 formed only of an ID, supplies the service supply unit 22 with the transmitted ID208 (Step 603).

When the information is formed of the new data 206 and its ID207, the re-reception suppression control unit 23 supplies the service supply unit 22 only with the ID207 (Step 604) and holds the data 206 and the ID207 as the received data 212 and its ID211 in the received data cache unit 24 (Step 605).

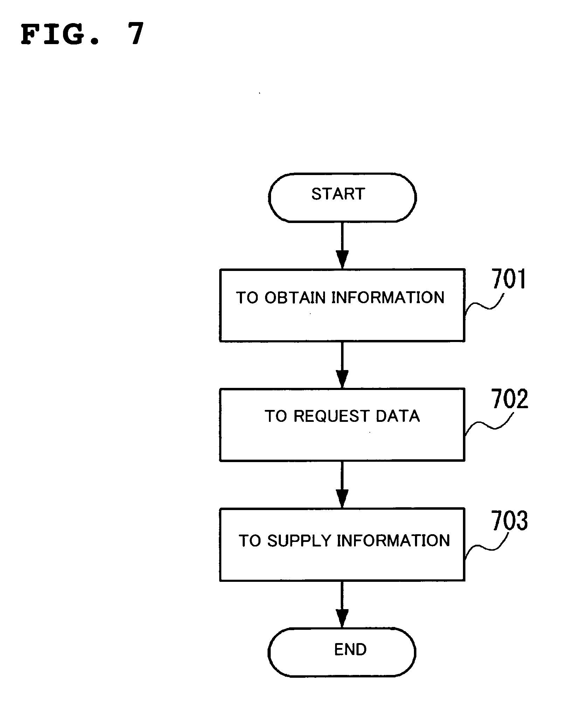

Fig. 7 is a flow chart showing processing of the service supply unit 22 of the portable terminal 20 in the embodiment of the present invention.

The service supply unit 22 having obtained the received ID208 or the new ID206 (Step 701) requests data from the re-reception suppression control unit 23 with the ID208 or the ID206 as a key item (Step 702). The re-reception suppression control unit 23 obtains the received ID and its corresponding data from the received data cache unit 24 to supply the service supply unit 22 with these data. According to the received data, the service supply unit 22 is allowed to supply a user with information by using the output interface (step 703).

Even when confirmation processing at the re-transmission suppression control unit 13 of the information supply server 10 (shown at Step 502 in Fig. 5) finds that IDs are the same, however, if data is updated on the data server 30 side, the data might not coincide with each other. While data update is executed as required with an ID unchanged at the time of version-up or rectification of data errors, data will be rewritten.

In this case, required is a mechanism for avoiding disagreement in data caused by the update by comparing not only the same ID but also data and confirming update at the time of executing the processing of confirming existence of the same ID. The mechanism of avoiding disagreement will be described.

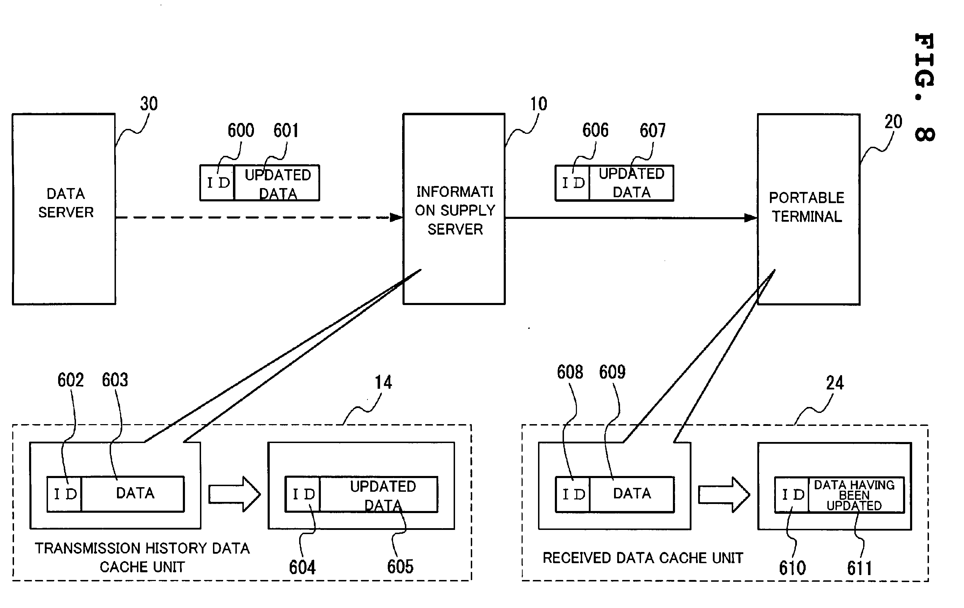

Fig. 8 is a diagram for use in explaining the mechanism of avoiding disagreement at the time of data update in the embodiment of the present invention. In the following description, the main part of Fig. 1 will be referred to as required.

With reference to Fig. 8, the communication control unit 11 of the information supply server 10 having received updated data 601 and its ID600 from the data server 30 in response to a request from the portable terminal 20 transfers the information to the re-transmission suppression control unit 13. It is assumed that at this time, ID602 which is the same ID as the ID600, and its data 603 are held in the transmission history data cache unit 14. In other words, the data 603 is data yet to be updated and the updated data 601 is data having been updated.

The re-transmission suppression control unit 13 compares the data 603 with the updated data 601.

As a result of the comparison, when the data 603 and the updated data 601 disagree, the data 603 is updated to updated data 605 considering that the data 603 has been updated to the latest updated data 601.

The re-transmission suppression control unit 13 of the information supply server 10 changes an ID604 to an ID606 and the updated data 605 to updated data 607 and transmits the changed ID and data toward the portable terminal 20 through the communication control unit 11.

These data are received by the re-reception suppression control unit 23 of the portable terminal 20. The re-reception suppression control unit 23 refers to the received data cache unit 24 and when finding that there exists an ID608 which is the same as the ID606 and that the updated data 607 is already transmitted, determines that the information has been updated. The re-reception suppression control unit 23 replaces the updated data 607 by data 609 as a set with the ID608 held in the received data cache unit 24 to have data 611 having been updated. Since this example shows a case of data rewriting by update, the ID will not be rewritten.

Thus, at the time of information transmission from the information supply server 10 to the portable terminal 20, as to information determined to be held in the received data cache unit 24 of the portable terminal 20, only its ID is transmitted from the information supply server 10. As to information determined not to be held or to have been updated, its data and ID are transmitted. Simultaneously, by the processing of holding the relevant data and ID in the transmission history data cache unit 14 or updating the same, the information supply server 10 enables the contents of the transmission history data cache unit 14 and the contents of the received data cache unit 24 which are held by the portable terminal 20 to be maintained the same except at the time of data update.

In addition, executing processing of compressing data transmitted from the information supply server 10 and transmitting the compressed data to the portable terminal 20 enables reduction of traffic in volume.

It is also possible to transmit, to the portable terminal 20, data transmitted from the information supply server 10 after enciphering the data.

As described in the foregoing, according to the present embodiment, since the transmission history data cache unit 14 of the information supply server 10 and the received data cache unit 24 of the portable terminal 20 are maintained the same except at the time of data update, the information supply server 10 needs to have a function of defining a cache size of the received data cache unit 24 of the portable terminal 20.

The function of defining the cache size of the portable terminal 20 is to define a usable size as the received data cache unit 24 for the portable terminal 20 at a first request for information made by the portable terminal 20 because usable size might differ depending on a kind of the portable terminal 20 to be used.

In the following, description will be made of cache size definition with reference to the main part of Fig. 1.

At a first request for information supply made by the portable terminal 20, upon receiving the request, the re-transmission suppression control unit 13 of the information supply server 10 issues a request command for confirming its held cache size. Based on a return value of the command, the re-transmission suppression control unit 13 of the information supply server 10 determines a cache size to be used and ensures a cache size corresponding to the portable terminal 20 for its own transmission history data cache unit 14.

After ensuring the cache size, the size information is transmitted from the communication control unit 11 to the re-reception suppression control unit 23 of the portable terminal 20. The re-reception suppression control unit 23 of the portable terminal 20 responsively ensures the size of the received data cache unit 24 based on the received size.

While the foregoing description of the embodiment has been made with respect to a case of one portable terminal 20, a plurality of portable terminals 20 may be connected to one information supply server 10.

In such a case, possible method is, with the information supply server 10 holding a cache size held by each portable terminal 20 as information inherent to each portable terminal in a data table or the like, confirming how large a cache a connected portable terminal has by using the data table to determine a cache size.

Alternatively, when the portable terminal 20 side already ensures a part of a cache as a definite region or when it ensures a part for other application to use a cache, the remaining size may be used as a cache size of the transmission history data cache unit 14 and the received data cache unit 24.

According to the foregoing described first embodiment, at the time of transmitting data requested by the portable terminal from the information supply server, referring to data of the cache unit in which transmitted data is held enables determination whether data is already transmitted or not, thereby suppressing re-transmission of data from the server to the portable terminal.

### [SECOND EMBODIMENT]

Next, a second embodiment of the present invention will be described.

The second embodiment is characterized in that even when a user of the portable terminal 20 edits received data in the received data cache unit 24, the transmission history data cache unit 14 disposed in the information supply server 10 and the received data cache unit 24 of the portable terminal 20 can be maintained the same.

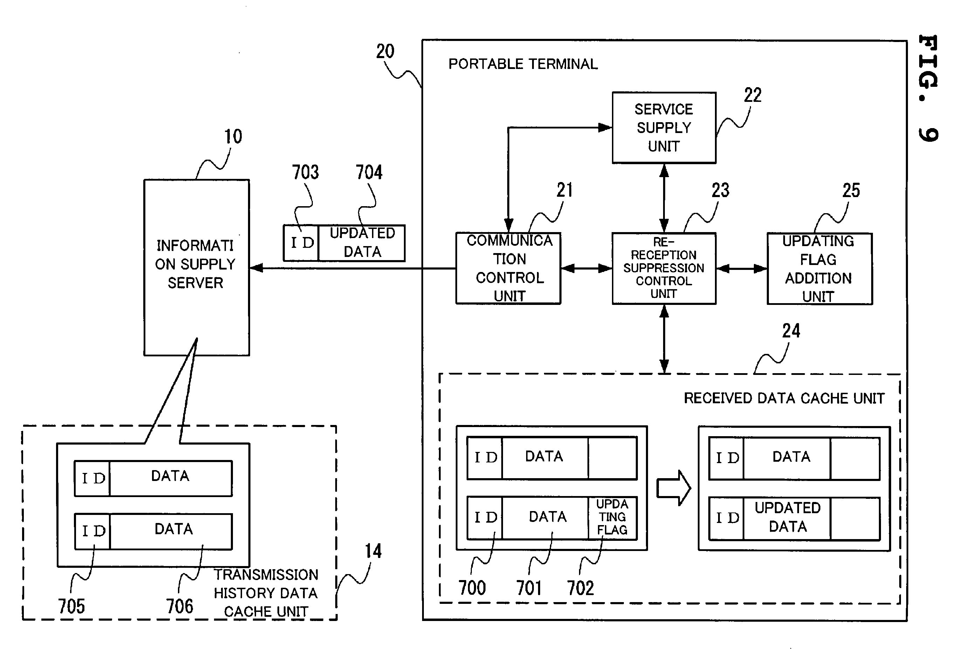

Fig. 9 is a diagram for use in explaining the present embodiment. In the following description, the main part of Fig. 1 will be referred to as required.

Assume, for example, that user's own schedule is changed. In such a case, the user refers to the user's own schedule (not shown) held in the received data cache unit 24 by using a schedule management application provided by the service supply unit 22. Next, the user edits an item to be changed by using an input interface by an editing function provided by the service supply unit 22.

Also in such a case, the present embodiment enables transmission history in the transmission history data cache unit 14 of the information supply server 10 and received data in the received data cache unit 24 of the portable terminal 20 to be maintained the same except at the time of data update.

With reference to Fig. 9, in the portable terminal 20, an updating flag addition unit 25 is additionally disposed as compared with the structure of the first embodiment. As to data arrangement of the received data cache unit 24, an updating flag 702, a flag to be applied when data 701 is updated is added.

The updating flag 702 is managed as a set with the data 701 and an ID700. In the information supply server 10, data 706 and an ID705 corresponding to the data 701 are held in the transmission history data cache unit 14.

In an initial state before execution of the processing, the data 701 and the data 706 are the same and the ID700 and the ID705 are the same.

As to the data 701 in the received data cache unit 24 of the portable terminal 20, a user is allowed to edit the contents by using an input interface provided by the service supply unit 22.

When the user executes editing, the data 701 in the received data cache unit 24 is updated to have edited contents, and to the updating flag 702 indicating that update is executed, the updating flag 702 is applied by the updating flag addition unit 25. The updating flag 702 may be the numerical number 1 or alphabet A, for example.

When by the input interface provided by the service supply unit 22, the user finishes editing to instruct to end the processing, the service supply unit 22 notifies the re-reception suppression control unit 23 of the end of the editing processing.

The re-reception suppression control unit 23 having been notified of the end of editing requests the updating flag addition unit 25 to confirm the updating flag 702 of the received data cache unit 24, takes out the ID700 and the data 701 to which the flag is applied and transmits the ID700 as ID703 and the data 701 having been updated as updated data 704 to the information supply server 10 through the communication control unit 25.

When the transmission is executed, the re-reception suppression control unit 23 instructs the updating flag addition unit 25 to remove the updating flag applied to the updating flag 702, so that the updating flag addition unit 25 executes processing of removing the updating flag 702.

The information supply server 10 receives the updated data 704 and the ID703 at the re-transmission suppression control unit 13. The re-transmission suppression control unit 13 extracts the data 706 corresponding to the ID705 which is the same as the ID703 and transfers the updated data 704 and the data 706 to the service supply unit 12. With reference to the obtained information, the service supply unit 12 determines whether to rewrite the information in the transmission history data cache 14 into the information obtained from the portable terminal 20 or when the information is updated also on the data server 30 side, to rewrite the information into the updated information, which processing depends on service to be supplied and either of which can be selected depending on circumstances.

According to the second embodiment, since when information is edited on the portable terminal side by the above-described operation, the cache contents of the service supply server 10 and the portable terminal 20 can be maintained the same except at the time of information updating, executing the re-transmission suppression function described in the first embodiment enables reduction in a volume of data communication.

### [THIRD EMBODIMENT]

A third embodiment of the present invention will be described with reference to the drawings.

Here, description will be made how to cope with a case where when adding new information, it might exceed the cache size of the received data cache unit 24 defined in the first embodiment because the amount of information is large. According to the present embodiment, the re-transmission suppression control unit 13 of the information supply server 10 and the re-reception suppression control unit 23 of the portable terminal 20 hold the same cache management algorithm to execute processing.

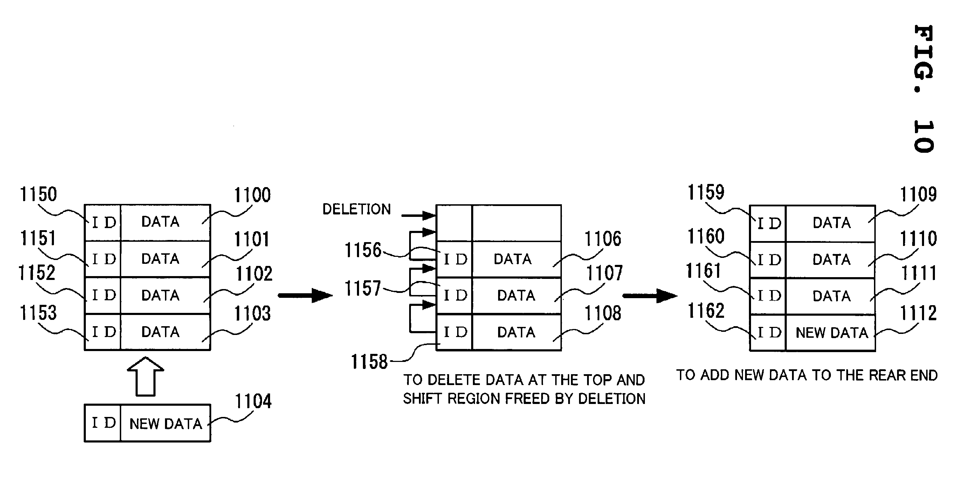

Fig. 10 is a diagram showing data holding of the transmission history data cache unit 14 for use in explaining the present embodiment. In the following description, the main part of Fig. 1 will be referred to as required.

The information supply server 10 which comprehends the size of the received data cache unit 24 owned by the portable terminal 20 by the method of the first embodiment ensures the transmission history data cache unit 14 by the same cache size.

Assume that upon an information request from the portable terminal 20, the information supply server 10 makes an information request to the data server 30 and receives new data 1104 from the data server 30.

With reference to Fig. 10, in a case where addition of the new data 1104 makes the size exceed a size ensured as a data holding region in the transmission history data cache unit 14, the re-transmission suppression control unit 13 refers to the transmission history data cache unit 14 to start the cache management algorithm.

First, delete data 1100 and an ID1150 at the top of the data holding region of the transmission history data cache unit 14. To a region freed by the deletion, move data 1106 and an ID1156 and sequentially move the remaining data to a then freed region to fill in the empty region. As a result, a last free region is formed to which new data 1112 and its ID1162 are added.

In a case where deletion of only one data fails to satisfy a region to which new data is added, delete a plurality of pieces of data for freeing a minimum region to which new data can be added.

Providing such an algorithm also in the re-reception suppression control unit 23 on the portable terminal 20 side enables processing without falling short of a cache size when new data is added.

Setting top data to be deleted to be data whose use frequency is low and whose necessity is low in executing the above-described processing enables more efficient use of a cache region. Therefore, the re-transmission suppression control unit 13 of the information supply server 10 and the re-reception suppression control unit 23 of the portable terminal 20 execute processing of preferentially putting data whose use frequency is low and whose necessity is low at the top when using the re-transmission suppressing function and the re-reception suppressing function, respectively. The processing will be described in the following.

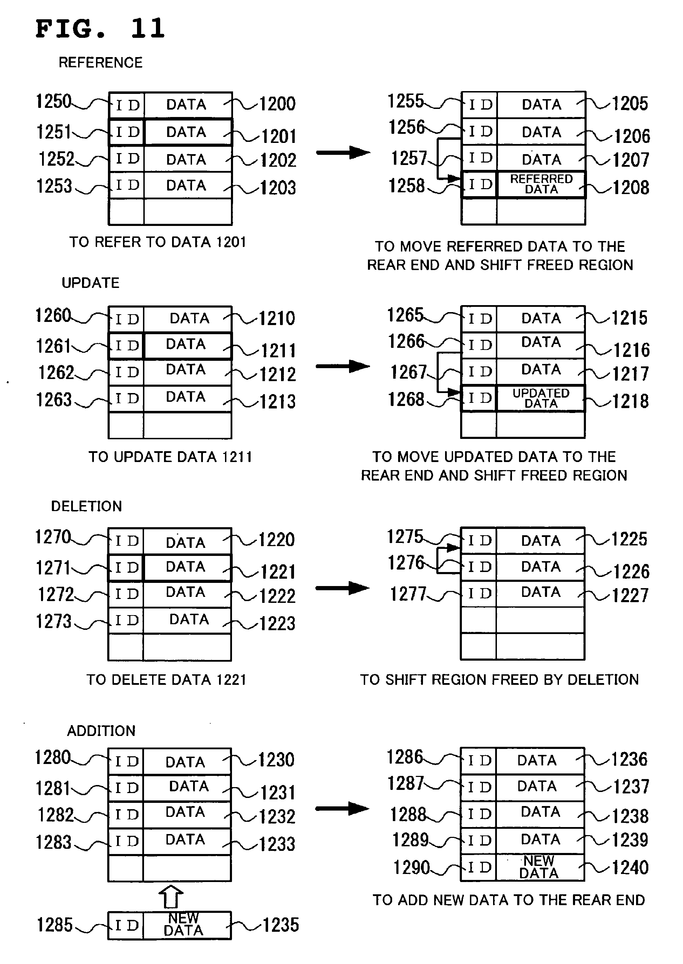

Fig. 11 is a diagram showing data holding of the transmission history data cache unit 14 for use in explaining the present embodiment. In the following description, the main part of Fig. 1 will be referred to as required.

First, description will be made of processing executed when data is referred to in the re-transmission suppression control unit 13. When data 1201 is referred to to compare data at the time of re-transmission suppression processing, in the rear of the freed data holding region of the transmission history data cache unit 14, move the data 1201 and its ID1251 to make the same as referred data 1208 and an ID1258. To a region freed by the moving, shift data 1203 and ID1253 and sequentially shift data upwards to a freed region to leave no space.

Next, description will be made of processing executed when data is updated in the re-transmission suppression control unit 13. When at the time of executing processing of updating data for suppressing re-transmission in the re-transmission suppression control unit 13, data 1211 and ID1261 are updated, updated data 1218 and ID1268 are held in the rear of the free region of the transmission history data cache unit 14. In a region freed by the moving, shift an ID1262 and data 1212 to make the same as an ID1266 and data 1216 and sequentially shift the data upwards to a freed region to leave no space.

Next, description will be made of a case where data is deleted in the re-transmission suppression control unit 13. When at the time of executing re-transmission suppression processing in the re-transmission suppression control unit 13, data 1221 is unnecessary, the transmission history data cache unit 14 executes processing of deleting the data 1211. In a region freed by the deletion processing, shift data 1222 and an ID1272 and make the same as data 1226 and an ID1276 and sequentially shift the data upwards to a freed region to leave no space.

Lastly, description will be made of processing executed in the re-transmission suppression control unit 13 for adding new data. When in executing re-transmission suppression processing, the re-transmission suppression control unit 13 receives new data 1235 and an ID1285, it executes processing of adding the new data 1235 to the transmission history data cache unit 14. After data 1239 at the rear end in the transmission history data cache unit 14, new data 1240 and its ID are held.

The above-described processing of data reference, data update, data deletion and new data addition can be executed similarly in the re-reception suppression control unit 23 and the received data cache unit 24 of the portable terminal 20 as well.

### [FOURTH EMBODIMENT]

Next, a fourth embodiment of the present invention will be described with reference to the drawing.

The present embodiment is characterized in providing a re-transmission suppression function while suppressing a cache storage capacity by using a hash function when holding data in the transmission history data cache unit 14 disposed in the information supply server 10.

With the structure of the first embodiment, when holding new data in a cache, data is hashed by using a hash function and held in the transmission history data cache unit 14. Usable as a hash function in this case is SHA-1 or MD5 and means for hashing is not limited.

Hashing of data enables difference in updated data to be found with a smaller amount of data than that of original data, thereby enabling a holding region used in the transmission history data cache unit 14 to be suppressed.

Next, description will be made of processing executed when information is received from the data server 30 to find that it is updated information in the present embodiment.

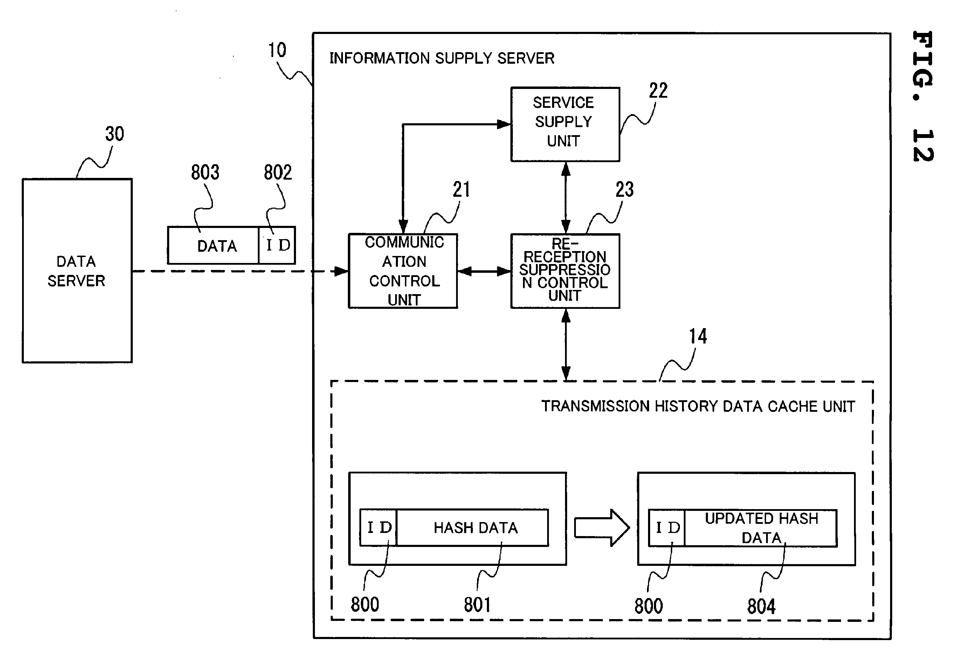

Fig. 12 is a diagram for use in explaining the present embodiment.

The information supply server 10 having made a request for information upon a request from the portable terminal 20 receives data 803 and an ID802 from the data server 30. The information supply server 10 having received the information transfers the information to the re-transmission suppression control unit 13.

The re-transmission suppression control unit 13 having received the information hashes the data. After hashing the data 803, the data obtained by hashing the data 803 and hash data 801 whose ID is the same as the ID802 held in the transmission history data cache unit 14 are compared and when they are different, determination is made that the data is updated to replace the hash data 801 by the data obtained by hashing the data 803 and hold the replaced data as updated hash data 804 in the transmission history data cache unit 14.

Thus, use of a hash function enables the data re-transmission suppressing function to be provided while suppressing a cache storage capacity.

### [FIFTH EMBODIMENT]

Next, a fifth embodiment of the present invention will be described with reference to the drawing.

According to the present embodiment, at the time of holding data in the transmission history data cache unit 14 disposed in the information supply server 10, data holding is saved in place of holding the time of update of the data enables the re-transmission suppressing function to be provided while suppressing a cache storage capacity.

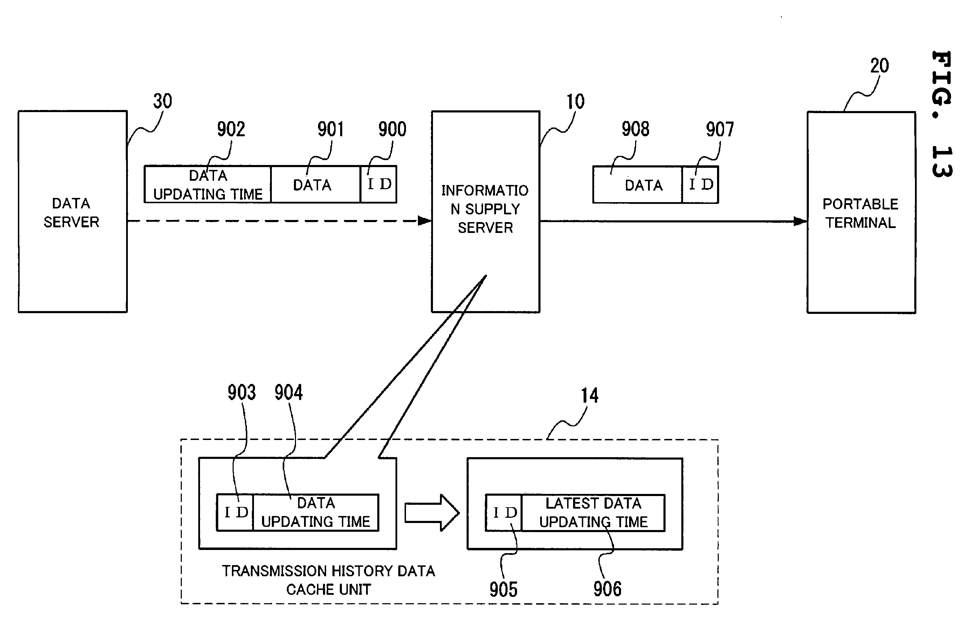

Fig. 13 is a diagram for use in explaining the present embodiment.

With the structure of the first embodiment, while an ID900, data 901 and a data updating time 902 are transmitted from the data server 30, the supplied ID900 and data updating time 902 are held in the transmission history data cache unit 14. This arrangement enables difference in data to be recorded with a smaller amount of data than that of original data to suppress the storage amount of a holding region used in the transmission history data cache unit 14.

Next, description will be made of processing executed when information is received from the data server 30 to find that the information is updated information in the present embodiment.

The information supply server 10 having made an information request upon a request from the portable terminal 20 obtains the ID900, the data 901 and the data updating time 902 from the data server 30.

The information supply server 10 having obtained the information transfers the information to the re-transmission suppression control unit 13. The re-transmission suppression control unit 13 having obtained the information compares a data updating time 904 held at the same ID903 and the data updating time 902, and when finding a difference, determines that the data is updated to replace the data updating time 904 with the data updating time 902 and hold the time as a latest data updating time 906 in the transmission history data cache unit 14 and transmits the data 901 as data 908 and the ID900 as an ID907 toward the portable terminal.

According to the fifth embodiment, the foregoing operation enables the data re-transmission suppressing function to be provided while suppressing a cache storage capacity by using information of a data updating time.

### [SIXTH EMBODIMENT]

Next, a sixth embodiment of the present invention will be described with reference to the drawing.

According to the present embodiment, appropriate one can be selected from the data servers 30 connected to the information supply server 10 according to service to be used through the portable terminal 20.

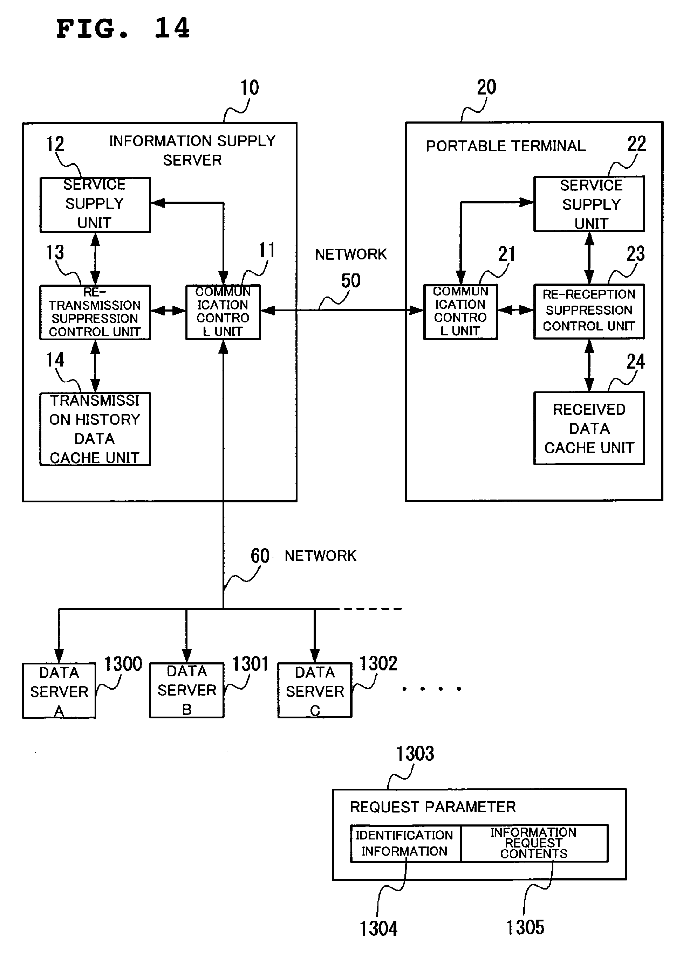

Fig. 14 is a diagram for use in explaining the present embodiment.

The service supply unit 22 of the portable terminal 20 provides a plurality of services, from which a user uses service he/she wants. By using the service, an information request is generated from the portable terminal 20 to the information supply server 10 and the re-reception suppression control unit 23 issues a request parameter 1303.

With reference to Fig. 14, the request parameter 1303 includes identification information 1304 for identifying which service is being used and information request contents 1305 as a key item for selecting information to be received.

The request parameter 1303 is transmitted to the information supply server 10 through the communication control unit 21. The service supply unit 12 of the information supply server 10 analyzes the identification information 1304 of the request parameter to identify a data server to which the request is made.

The service supply unit 12 sends the request parameter 1303 with the identification information removed to an appropriate data server through the communication control unit 11 from the re-transmission suppression control unit 13. Assume here that the service supply unit 12 selects a data server A1300 as an appropriate server.

Then, information corresponding to the information request contents 1305 is transmitted from the data server A1300 toward the information supply server 10.

### [SEVENTH EMBODIMENT]

Next, a seventh embodiment of the present invention will be described with reference to the drawing.

The present embodiment enables information sent from the data server 30 to the information supply server 10 to be compared with data of the transmission history data cache unit 14 to transmit difference information. Difference information will be described later. In addition, unlike the above-described embodiments, no ID is used.

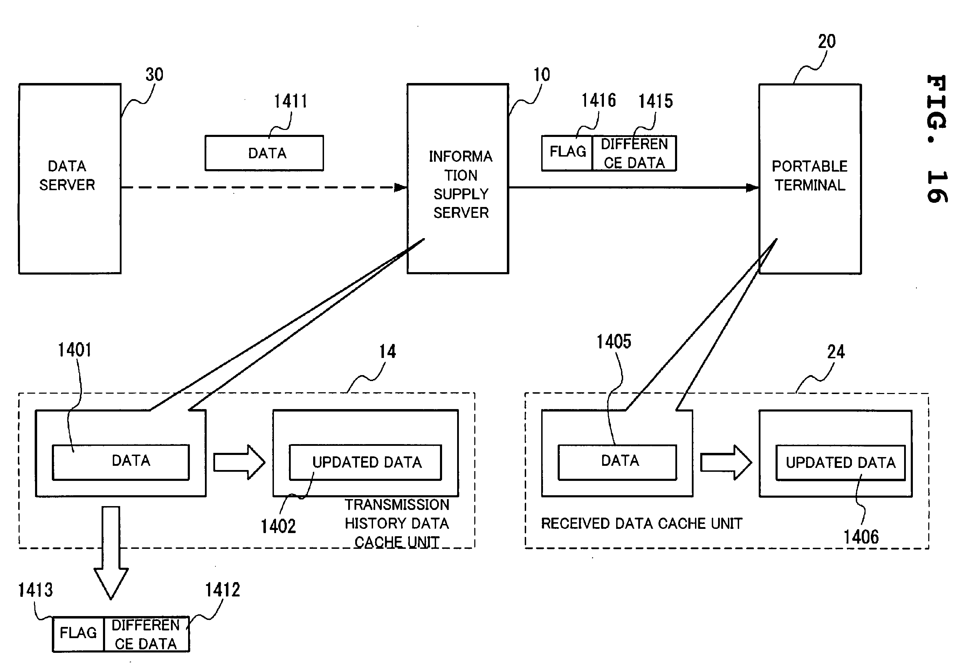

Fig. 16 is a diagram for use in explaining the present embodiment.

Similarly to other embodiments, the portable terminal 20 requests information from the information supply server 10. The information supply server 10 makes a request for information to the data server 30 having information requested by the portable terminal 20. The data server 30 having received the information request transmits data 1411 corresponding to the request toward the information supply server 10.

The information supply server 10 having received the data 1411 refers to the transmission history data cache unit 14 to compare the data with data 1401.

When there is a difference between the data 1411 and the data 1401 as a result of the comparison, information about a difference of the data 1411 from the data 1401 is extracted. ┌Information about a difference of the data 1411 from the data 1401J here is defined to be information indicative of a difference between the data 1401 and the data 1411, which includes information for generating the data 1411 based on the data 1401. In the following, the difference information formed into data will be referred to as difference data 1412.

In addition, a flag 1413 for discriminating transmission contents is added to enable the portable terminal 20 to determine whether transmitted content is the data 1411 itself or the difference data 1412. The flag 1413 is assumed to be a flag indicating whether transmitted data is difference data or ordinary data.

When preparations for transmission to the portable terminal 20 are completed, the data 1401 is rewritten into the data 1411 to have updated data 1402 and then a flag 1416 and difference data 1415 are transmitted to the portable terminal 20.

When there is no difference between the data 1411 and the data 1401 to find that they are already transmitted, only the flag is transmitted from the information supply server 10.

The portable terminal 20 having received the data determines from the flag 1416 that the received content is the difference data 1415 and by using information of the difference data 1415 in the received data cache unit 24, generates updated data 1406 based on data 1405 to rewrite the data 1405 into the data 1406.

Thus, by extracting and transmitting only a difference in information, re-transmission of data can be suppressed and communication traffic can be reduced as well.

When the difference between the data 1411 and the data 1401 is large, the difference data 1412 might exceed the size of the data 1411. Assume therefore that before transmission to the portable terminal 20, the size of the difference data 1412 and the size of the data 1411 received from the data server 30 are compared and when the size of the difference data 1412 exceeds the size of the data 1411, the data 1411 is selected as information to be transmitted to the portable terminal 20. In this case, the flag 1413 is assumed to be indicative of being not difference data but ordinary data.

### [EIGHTH EMBODIMENT]

Next, an eighth embodiment of the present invention will be described with reference to the drawing.

The present embodiment allows, when an employee belonging to a company having a data server accesses the data server of his/her own company from a portable terminal to obtain information, the employee to use the re-transmission suppressing function of the information supply server 10 not owned by his/her own company.

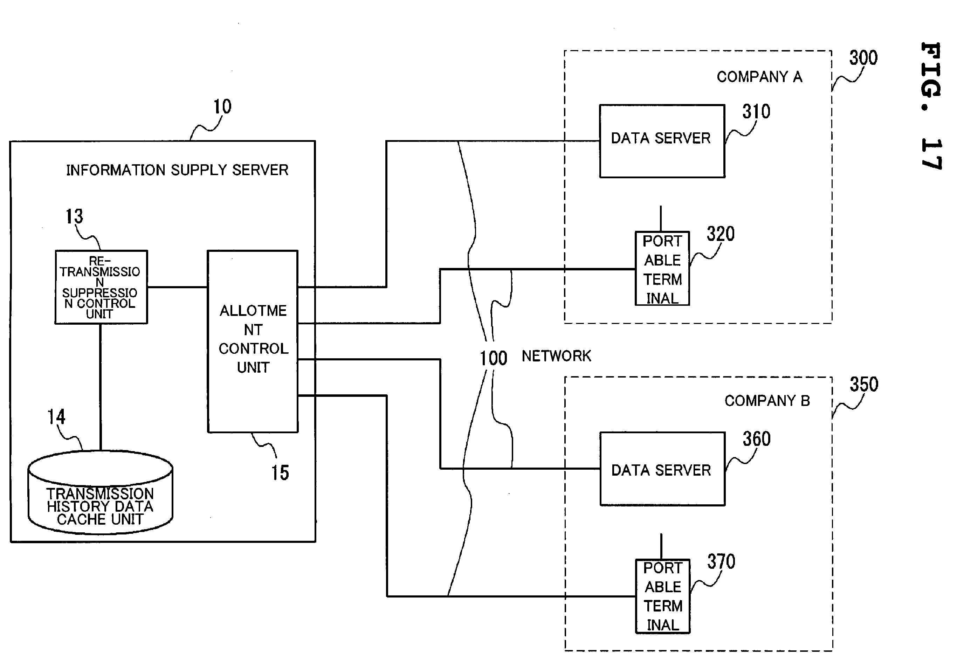

Fig. 17 is a diagram for use in explaining the present embodiment.

Company A 300 and company B 350 have data servers 310 and 360, respectively, and employees of the companies use portable terminals 320 and 370, respectively. The portable terminal 320, 370 may be supplied to an employee by the company A 300 or the company B350, or may be personal belongings of an employee. Although illustrated in the figure is an example where two companies, the company A 300 and the company B 350, use the information supply server 20, the number of companies may be plural not less than three.

In addition, although in the figure, the portable terminal of each company is shown as one, a plurality of employees having portable terminals may exist in the company A 300 and the company B 350. The company A 300 and the company B 350 are assumed to have a contract for server use with a company having the information supply server 10.

Since a method of using the information supply server 10 is the same in the company A 300 and the company B 350, description will be made with respect to the company A 300 in the following.

The employee of the company A 300 owns the portable terminal 320. The employee first downloads software containing the re-reception suppression processing function from the information supply server 10 into the portable terminal 320.

The re-reception suppression processing function here is a function provided in the portable terminal 20 as described in the first embodiment and is assumed to include a function of, when upon reception only of identification information from the information supply server 10, only the identification information is supplied to the service supply unit 22 which supplies information to the output interface of the portable terminal 20, obtaining information corresponding to the identification information from the received data cache unit 24 by the service supply unit 22 and upon reception of information and identification information of the relevant information from the information supply server 10, supplying only the identification information to the service supply unit 22 and holding the relevant information and the identification information of the relevant information in the received data cache unit 24 to obtain information corresponding to the identification information from the received data cache unit 24 by the service supply unit 22.

Completion of downloading of the software into the portable terminal 320 allows service by the software to be used.

The service by the software is obtaining a result of a request for information made to the data server 310.

When an information request is made by the portable terminal 320 by the software, the request is transmitted to the information supply server 10 through a network 100. The information supply server 10 determines from which portable terminal the request is issued to select the data server 310 to which an employee using the portable terminal 320 belongs by an allotment control unit 15.

The allotment control unit 15 having sensed the request being one from the portable terminal 320 transmits the request to the data server 310 of the company A 300. Upon receiving the request, the data server 310 transmits information corresponding to the request toward the information supply server 10 through the network 100.

Upon receiving the information corresponding to the request, the information supply server 10 provides the re-transmission suppression control unit 13 with the information, so that after executing the same re-transmission suppression processing as that described in the first embodiment or the seventh embodiment, the re-transmission suppression control unit 13 returns the processed information to the allotment control unit 15.

Here, the re-transmission suppression processing described in the first embodiment is collating information requested by the portable terminal 20 with transmitted information which is held in the information supply server 10 to determine whether the information requested by the portable terminal 20 has been already transmitted or not, which includes processing of collating identification information of the information requested by the portable terminal 20 with identification information of the transmission history data cache unit 14 to determine whether the information has been already transmitted or not.

The re-transmission suppression processing described in the seventh embodiment is collating information requested by the portable terminal 20 with transmitted information which is held in the information supply server 10 to determine whether the information requested by the portable terminal 20 has been already transmitted or not, which includes processing of forming, at the time of collation, difference information as information for generating data based on transmitted data and a flag for determining whether transmitted information is difference information or information other than difference information.

At the same time of the return of the processed information to the allotment control unit 15, the re-transmission suppression control unit 13 holds the information as transmission history in the transmission history data cache unit 14. Assume that a region for holding history in the transmission history data cache unit 14 is divided for each company which is further divided for each portable terminal.

Determination of a region for use at the time of holding is realized by registering identification information (solid identification information) that a standard portable terminal has in an information table in the allotment control unit 15 in advance.

When providing the re-transmission suppression control unit 13 with information, the allotment control unit 15 provides information for identifying a registered holding region together.

The allotment control unit 15 transmits the information subjected to the re-transmission suppression processing to the portable terminal A320 through the network 100.

Information subjected to the re-transmission suppression processing here represents information subjected to the same re-transmission suppression processing as that described above in the first embodiment or the seventh embodiment.

The portable terminal 320 having received the information from the allotment control unit 15 executes re-reception suppression processing by the re-reception suppression function contained in software.

The above-described eighth embodiment enables even a company failing to have the information supply server 10 to use re-transmission suppression processing to reduce costs required for communication by the portable terminal 320 through the network 100. It is also possible for a company having the information supply server 10 to charge a company using the server for operation management fees or provide such information as the amount of use or how much communication efficiency is improved as added value, thereby receiving compensation.

### [NINTH EMBODIMENT]

Next, a ninth embodiment of the present invention will be described with reference to the drawing.

According to the present embodiment, with a company having a data server provided with a service supply server and a portable terminal, the re-transmission suppression function can be used when accessing the data server from the portable terminal to obtain information.

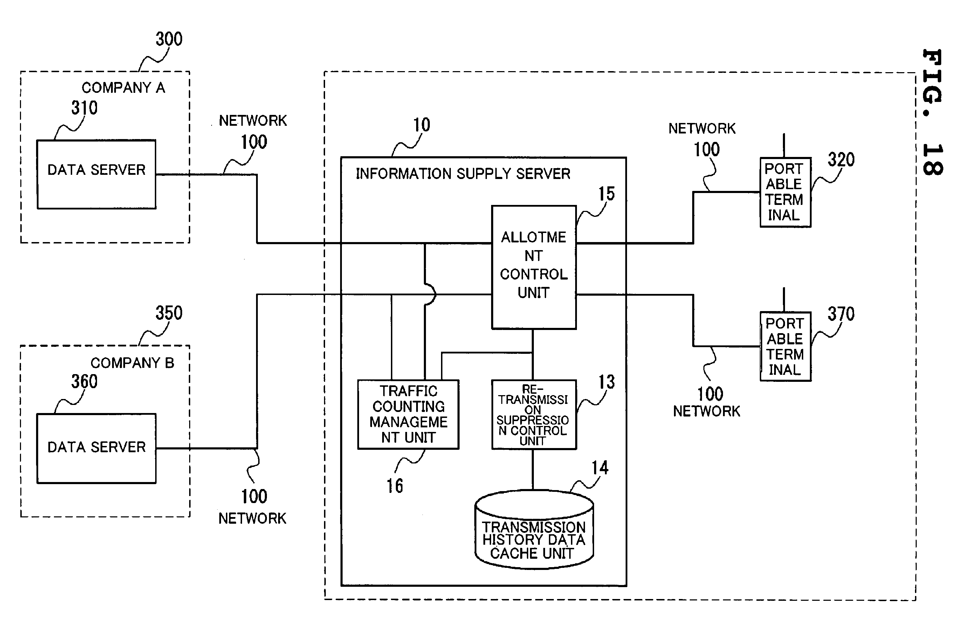

Fig. 18 is a diagram for use in explaining the present embodiment.

The company A 300 has the data server 310. The company A 300 uses the data server 310 from the portable terminal 320, as well as making a contract for use of the re-transmission suppression function with a management company of the information supply server 10 for using the re-transmission suppression control unit 13.

In addition, a rental contract for the use of the re-transmission suppression function by the portable terminal 320 may be made with the company or a contract for use may be made after purchasing the portable terminal 320. The portable terminal 320 may contain the re-reception suppression function in advance or at the start of use in the company A, software containing the re-reception suppression function may be downloaded from the information supply server 10.

An employee belonging to the company A uses the portable terminal 320 to make a request for data to the data server 310. The request is sent first to the information supply server 10 through the network and the information supply server 10 having received the request determines an information transmission destination at the allotment control unit 15 to transmit the request to the data server 310 through the network 100. The data server 310 having received the request sends information corresponding to the request to the information supply server 10 through the network 100.

The allotment control unit 15 of the information supply server 10 having received the information sends the information to the re-transmission suppression control unit 13. The re-transmission suppression control unit 13 executes the same re-transmission suppression processing as that of the first embodiment. Determination of a holding region at this time employs the same method as that described in the eighth embodiment. The re-transmission suppression control unit 13 sends the processed information to the allotment control unit 15. The allotment control unit 15 having received the information subjected to the re-transmission suppression processing supplies the portable terminal 320 with the information through the network 100. The portable terminal 320 having received the information subjected to the re-transmission suppression processing uses the information after executing processing by the same method as that described in the first embodiment by means of the re-reception suppression control unit 23 contained in the portable terminal 320 or the re-reception suppression function contained in software.

The ninth embodiment enables even a company failing to have the service supply server 10 to reduce costs of communication through the network 100 used by the portable terminal by using the re-transmission suppression processing.

In addition, since the company A makes a contract for use of the portable terminal with a company managing the information supply server 10, the company A will pay monthly charges for the use of the re-reception suppression function of the portable terminal to the company. At this time, conditions of the use from the portable terminal 320 are comprehended by a traffic counting management unit 16 to count only traffic connected to the data server 300. Thus, charging the company A for business use and charging an employee who uses the portable terminal for other use than business use helps reduction of portable terminal use charges of the company. In addition, it is possible to provide such information as the amount of use and how much communication efficiency is improved as added value and receive operation management fees or maintenance fees.

Although the foregoing description has been made of a case of the company A, the same is also the case with the company B or three or more companies.

### [TENTH EMBODIMENT]

Next, a tenth embodiment of the present invention will be described with reference to the drawing.

The present embodiment enables recovery processing when disagreement occurs between a cache owned by an information supply server and that owned by a portable terminal.

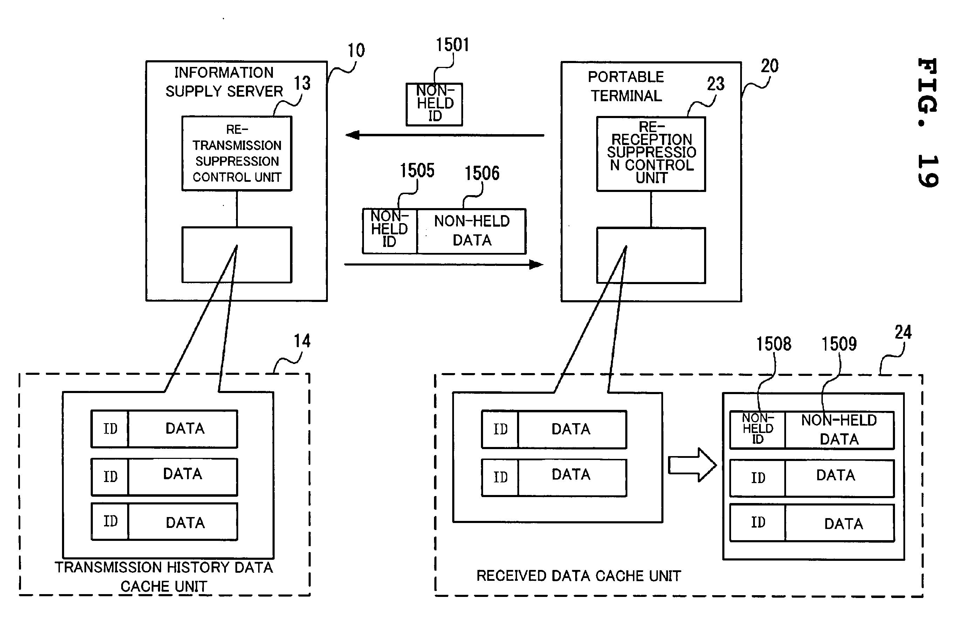

Fig. 19 is a diagram for use in explaining the present embodiment.

Description will be made with reference to Fig. 1 with respect to processing executed in a case where in the first and the second embodiments of the present invention, when communication is temporarily interrupted while new data is transmitted from the information supply server 10 to the portable terminal 20, data is preserved in the transmission history data cache unit 14 of the information supply server 10, while no data is preserved in the received data cache unit 24 of the portable terminal 20.

In such a case, even after temporary interruption of communication, processing of requesting information is executed from the portable terminal 20 toward the information supply server 10. Immediately after communication interruption, the same information request may occur as that as of before the communication interruption, or the same information request as that as of before the communication interruption may occur after different request processing occurs several times.

When the request having been issued before the communication interruption is issued from the portable terminal 20, the information supply server 10, in response to the request, makes a request for information to the data server 30, so that the data server 30 supplies the information supply server 10 with the information. The information supply server 10 compares the data received from the data server 30 and the data in the transmission history data cache unit 14 and as to information already held, determines that it is already transmitted and transmits its ID only to the portable terminal 20.

Because received is only the ID, the re-reception suppression control unit 23 of the portable terminal 20 having received the ID from the information supply server 10 considers the information as information already received and confirms the received data cache unit 24 to try to obtain data preserved in pair with the ID.

The portable terminal 20, however, fails to receive the ID because of communication interruption occurring during transmission from the information supply server 10 and the ID and the data fail to exist in the received data cache unit 24. Therefore, the re-reception suppression control unit 23 executes the following operation for again obtaining ID and data not existing as recovery processing.

The re-reception suppression control unit 23 issues an ID not existing in the received data cache unit as non-held ID 1501 to the information supply server 10. The information supply server 10 having received the non-held ID 1501 transfers the non-held ID1501 to the re-reception suppression control unit 23. The re-reception suppression control unit 23 extracts an ID1505 and data 1506 not held by the portable terminal from the transmission history data cache unit 14 and transmits the same toward the portable terminal 20.

The portable terminal 20 having received the non-held ID1505 and the non-held data 1506 transfers the same to the re-reception suppression control unit 23. The re-reception suppression control unit 23 preserves a non-held ID 1508 and non-held data 1509 in the received data cache unit 24.

Operation of the information supply server 10 of the present invention can be realized not only by hardware but also as software by executing an information supply control program (application) 70 which executes the above-described respective units on the information supply server 10 as a computer processing device. The information supply control program 70 is held in a magnetic disk, a semiconductor storage or other recording medium and loaded from the recording medium into the information supply server 10 to control its operation, thereby realizing the above-described respective functions.

Operation of the portable terminal 20 of the present invention can be also realized not only by hardware but also as software by executing a portable terminal control program (application) 80 which executes the above-described respective units on the portable terminal 20 as a computer processing device. The portable terminal control program 80 is held in a magnetic disk, a semiconductor storage or other recording medium and loaded from the recording medium into the portable terminal 20 to control its operation, thereby realizing the above-described respective functions.

Although the present invention has been described in the foregoing with respect to the plurality of preferred embodiments, the present invention is not limited to the above-described embodiments and can be implemented in various forms within a range of its technical idea.

The information supply system, the information supply server, the portable terminal, the information supply control program and the portable terminal control program of the present invention attain the effects set forth in the following.

First, when data requested by the portable terminal is transmitted from the information supply server, reference to data of the cache unit in which transmitted data is held enables determination whether the data is already transmitted or not to suppress re-transmission of data from the server to the portable terminal.

Secondly, when data requested by the portable terminal is transmitted from the server, even in a case of transmitted data, because only an identification number of the data is sent, the portable terminal is allowed to read data with the same identification number from the cache unit in which received data is held, while reducing the volume of traffic of communication as compared with a case of data re-transmission.

## Claims

1. An information supply system in which, in response to a request for information made by a portable terminal connected through a network, an information supply server supplies said portable terminal with said requested information, wherein
information requested by said portable terminal is collated with already transmitted information which is held in said information supply server to determine whether the information requested by said portable terminal is already transmitted or not, thereby suppressing re-transmission of said information.

2. The information supply system as set forth in claim 1, wherein said information supply server includes a cache unit which holds said information already transmitted and identification information for identifying the relevant information so as to be correlated with each other, and collates identification information of information requested by said portable terminal with identification information of said cache unit to determine whether said information is already transmitted or not.

3. The information supply system as set forth in claim 2, wherein
when determination is made that information is already transmitted, only identification information of said information is transmitted from said information supply server to said portable terminal, and
when determination is made that the information is yet to be transmitted, said information and identification information of the relevant information are transmitted from said information supply server to said portable terminal.

4. The information supply system as set forth in claim 3, wherein provided in said portable terminal is a cache unit which holds information received from said information supply server and identification information of the relevant information so as to be correlated with each other, as well as reading said information upon receiving only the identification information of said information from said information supply server.

5. The information supply system as set forth in claim 4, wherein
upon reception of only said identification information from said information supply server, when only the relevant identification information is supplied to a service supply unit which supplies an output interface of said portable terminal with information, said service supply unit obtains information corresponding to said identification information from said cache unit, and
upon reception of said information and the identification information of the relevant information from said information supply server, only the relevant identification information is supplied to said service supply unit, the relevant information and the identification information of the relevant information are held in said cache unit, and said service supply unit obtains information corresponding to said identification information from said cache unit.

6. The information supply system as set forth in claim 4, wherein upon reception of a request for updated information corresponding to said transmitted information, updated information and identification information of the relevant information are obtained from a data server connected to said information supply server for supplying information corresponding to said request and when said updated information and information corresponding to the identification information of said updated information which is held in said cache unit fail to coincide with each other, said information held in said cache unit is rewritten by said updated information and said updated information and identification information are transmitted to said portable terminal.

7. The information supply system as set forth in claim 6, wherein upon reception of said updated information and identification information transmitted from said information supply server at said portable terminal, when information corresponding to the same identification information as said identification information is held in the cache unit provided in said portable terminal, said information is rewritten by said updated information.

8. The information supply system as set forth in any one of claims 3 to 7, wherein when storage capacity information of the cache unit provided in said information supply server is transmitted to said portable terminal, said portable terminal sets a storage capacity of the cache unit provided in said portable terminal based on said storage capacity information.

9. The information supply system as set forth in claim 4, wherein when information held in said cache unit is updated through an input interface of the portable terminal, an updating flag indicative of being updated is applied to said information and after said information and identification information are transmitted to said information supply server, said updating flag is deleted.

10. The information supply system as set forth in claim 3, wherein
when said cache unit has no free region for holding information, information and identification information held in the first region of said cache unit are deleted, information and identification information of the relevant information in the second and the following regions are moved to make said first region be at the top and new information and identification information of the relevant information are held in an information holding region in the rear,
when information of said cache unit is deleted, information and identification information in subsequent regions following a region in which the deleted information is held are moved to make said subsequent region be the region where the deleted information is held, and
when new information is added to said cache unit, new information and identification information are held subsequently to the information in the rear.

11. The information supply system as set forth in claim 3, wherein when upon a request for information from said portable terminal, information of said cache unit corresponding to said identification information is referred to, information and identification information in subsequent regions following a region in which the referred information is held are moved to make said subsequent region be the region where the referred information is held and the referred information and the identification information are held in an information holding region in the rear.

12. The information supply system as set forth in claim 6, wherein when said information held in said cache unit is rewritten by said updated information, information and identification information of the relevant information in subsequent regions following a region in which the updated information is held are moved to make said subsequent region be the region where the updated information is held and the updated information and the identification information are held in an information holding region in the rear.

13. The information supply system as set forth in claim 3, wherein after hashing, among information and identification information of the relevant information transmitted from said information supply server to said portable terminal, said information by said information supply server by using a hash function, the hashed information is held together with the corresponding identification information in said cache unit.

14. The information supply system as set forth in claim 13, wherein when information to be transmitted to said portable terminal is made into a hash, if information which is hashed and which corresponds to the same identification information as the identification information of said information is already held in said cache unit,said information made into a hash and said hashed information are compared and, when the pieces of the information disagree with each other, said hashed information which is held in said cache unit is rewritten into said information made into a hash.

15. The information supply system as set forth in claim 3, wherein in addition to information and identification information of the relevant information, a corresponding information updating time is obtained from the data server connected to said information supply server by said information supply server and after said information and the identification information of the relevant information are transmitted from said information supply server to said portable terminal, the identification information of said information and said information updating time are held in said cache unit so as to be correlated with each other.

16. The information supply system as set forth in claim 15, wherein when at the time of obtaining said information updating time, the same identification information as the identification information of said information is held in said cache unit and an information updating time corresponding to the identification information of said information and an information updating time corresponding to said same identification information fail to coincide with each other, said information and the identification information of the relevant information are transmitted to said portable terminal.

17. An information supply system with a portable terminal and an information supply server which supplies the portable terminal with information connected through a network and with said information supply server being connected to a plurality of data servers, said information supply server, upon reception of an information supply request from said portable terminal, obtaining information and identification information of the relevant information from any of said plurality of data servers and supplying said portable terminal with said information and the identification information of the relevant information, wherein
when identification information for identifying information service to be used and information request contents as an information item for selecting information to be received are transmitted from said portable terminal to said information supply server,
said information supply server selects one data server from among said plurality of data servers based on said identification information, and
said information supply server receives, from said data base, a supply of information corresponding to the information request contents of said information sent from said portable terminal.

18. The information supply system as set forth in claim 1, wherein said information supply server includes a cache unit which holds said information already transmitted, and collates information requested by said portable terminal with information of said cache unit to determine whether said information is already transmitted or not.

19. The information supply system as set forth in claim 18, wherein
at the time of said collation, difference information as information for generating data based on transmitted data and a flag for determining whether transmitted information is difference information or not are generated by said information supply server and, when determination is made that said requested information is yet to be transmitted, said difference information and said flag are transmitted from said information supply server, and
when determination is made that the requested information is already transmitted, said flag is transmitted from said information supply server.

20. The information supply system as set forth in claim 1, wherein for each of a plurality of companies, a data server and a portable terminal belonging to the relevant company are provided, and provided in said information supply server is an allotment control unit which, when said portable terminal receives supply of information stored in said data server from said information supply server, allots said requested information to each company and makes a request to the data server of each company holding said portable terminal.

21. The information supply system as set forth in claim 1, wherein for each of a plurality of companies, a data server is provided, and a traffic counting management unit is provided which, when said portable terminal receives supply of information of each company stored in said data server from said information supply server, counts traffic use conditions of each company using said portable terminal to calculate using charges of the portable terminal for each said company.

22. The information supply system as set forth in claim 4, wherein when only identification information of said information is received from said information supply server and the relevant identification information fails to be held in said cache unit provided in said portable terminal, upon request for information corresponding to the relevant identification information made from said portable terminal to said information supply server, said information is read from the cache unit provided in said information supply server and said information and identification information of the relevant information are transmitted to said portable terminal.

23. An information supply server which is connected to a portable terminal and a data server for supplying information corresponding to said request through a network and which in response to a request for information from said portable terminal obtains information from said data server to supply said portable terminal with said requested information, which
collates transmitted information which is held and information requested by said portable terminal to determine whether the information requested by said portable terminal is already transmitted or not, thereby suppressing re-transmission of said information.

24. The information supply server as set forth in claim 23, further comprising a cache unit which holds said information already transmitted and identification information for identifying the relevant information so as to be correlated with each other, wherein identification information of information requested by said portable terminal is collated with identification information of said cache unit to determine whether said information is already transmitted or not.

25. The information supply server as set forth in claim 24, which
when determination is made that the information is already transmitted, transmits only identification information of said information to said portable terminal, and
when determination is made that the information is yet to be transmitted, transmits said information and identification information of the relevant information to said portable terminal.

26. The information supply server as set forth in claim 25, which upon reception of a request for updated information corresponding to transmitted information, obtains updated information and identification information of the relevant information from said data server to compare the updated information and information corresponding to the identification information of said updated information which is held in said cache unit by a re-transmission suppression control unit for suppressing re-transmission of information and, when the pieces of the information fail to coincide with each other, rewrites said information held in said cache unit by said updated information and transmits said updated information and identification information to said portable terminal.

27. The information supply server as set forth in any one of claims 23 to 26, which transmits storage capacity information of said cache unit to said portable terminal.

28. The information supply server as set forth in claim 25, which
when said cache unit has no free region for holding information, deletes information and identification information held in the first region of said cache unit, information and identification information of the relevant information in the second and the following regions are moved to make said first region be at the top and new information and identification information of the relevant information are held in an information holding region in the rear,
when information of said cache unit is deleted, moves information and identification information in subsequent regions following a region in which the deleted information is held to make said subsequent region be the region where the deleted information is held, and
when new information is added to said cache unit, holds new information and identification information subsequently to the information in the rear.

29. The information supply server as set forth in claim 25, which when identification information of information required by said portable terminal is collated with identification information of said cache unit and information of said cache unit corresponding to said identification information is referred to, moves information and identification information in subsequent regions following a region in which the referred information is held to make said subsequent region be the region where the referred information is held and holds the referred information and the identification information in an information holding region in the rear.

30. The information supply server as set forth in claim 26, which when rewriting said information held in said cache unit by said updated information, moves information and identification information of the relevant information in subsequent regions following a region in which the updated information is held to make said subsequent region be the region where the updated information is held, and holds the updated information and the identification information in an information holding region in the rear.

31. The information supply server as set forth in claim 25, which after hashing, among information and identification information of the relevant information transmitted to said portable terminal, said information by said information supply server by using a hash function, holds the hashed information together with the corresponding identification information in said cache unit.

32. The information supply server as set forth in claim 31, which makes information to be transmitted to said portable terminal into a hash, and when information which is hashed and which corresponds to the same identification information as the identification information of said information is already held in said cache unit,
compares said information made into a hash and said hashed information and when the pieces of the information disagree with each other, rewrites said hashed information which is held in said cache into said information made into a hash.

33. The information supply server as set forth in claim 25, which in addition to information and identification information of the relevant information, obtains a corresponding information updating time from said information server and, when transmitting said information and the identification information of the relevant information to said portable terminal, holds the identification information of said information and said information updating time in the cache unit provided in said information supply server.

34. The information supply server as set forth in claim 33, which at the time of obtaining said information updating time, when the same identification information as the identification information of said information is held in said cache unit and an information updating time corresponding to the identification information of said information and an information updating time corresponding to said same identification information fail to coincide with each other, transmits said information and the identification information of the relevant information to said portable terminal.

35. A portable terminal which is connected to an information supply server through a network and which, when making a request for information to said information supply server, receives supply of said requested information, comprising:
a cache unit which holds information received from said information supply server and identification information for identifying the relevant information so as to be correlated with each other and upon reception only of the identification information of said information from said information supply server, reads said information.

36. The portable terminal as set forth in claim 35, which upon reception of only said identification information from said information supply server, supplies only the relevant identification information to a service supply unit which supplies an output interface with information, and upon reception of information and identification information of the relevant information, supplies only the relevant identification information to said service supply unit and holds the relevant information and the identification information of the relevant information in said cache unit.

37. The portable terminal as set forth in claim 36, wherein
when receiving only said identification information, said service supply unit requests information corresponding to said identification information from a re-reception suppression control unit which suppresses re-reception of information and said re-reception suppression control unit obtains information corresponding to said identification information from said cache unit and supplies the information to said service supply unit, and
when receiving said information and identification information of the relevant information, said service supply unit requests information corresponding to said identification information from said re-reception suppression control unit and said re-reception suppression control unit obtains information corresponding to said identification information from said cache unit and supplies the information to said service supply unit.

38. The portable terminal as set forth in claim 36, which upon reception of updated information corresponding to said received information and identification information of the relevant information, when information corresponding to the same identification information as said identification information is held in said cache unit, rewrites said information by said updated information.

39. The portable terminal as set forth in any one of claims 35 to 38, which upon reception of storage capacity information of said cache unit from said information supply server, sets a storage capacity of said cache unit based on said storage capacity information.

40. The portable terminal as set forth in claim 35, which when information held in said cache unit is updated through an input interface, applies an updating flag indicative of being updated to said updated information and, after said information and identification information of the relevant information are transmitted to said information supply server, deletes said updating flag.

41. An information supply control program to be executed on an information supply server which is connected to a portable terminal and a data server through a network and in response to a request for information from said portable terminal, obtains information from said data server to supply said portable terminal with said requested information, which
executes the function of determining whether information requested by said portable terminal is already transmitted or not by collating transmitted information in a cache unit which holds transmitted information and identification information of the relevant information so as to be correlated with each other and the information requested by said portable terminal.

42. The information supply control program as set forth in claim 41, comprising the function of:
when determination is made that information is already transmitted, transmitting only identification information of said information to said portable terminal, and
when determination is made that the information is yet to be transmitted, transmitting said information and identification information of the relevant information to said portable terminal.

43. The information supply control program as set forth in claim 42, comprising the function of upon reception of a request for updated information corresponding to transmitted information, obtaining updated information and identification information of the relevant information from said data server and comparing the updated information and information corresponding to the identification information of said updated information which is held in said cache unit and when the pieces of the information fail to coincide with each other, rewriting said information held in said cache unit by said updated information and transmitting said updated information and the identification information to said portable terminal.

44. The information supply control program as set forth in any one of claims 41 to 43, comprising the function of transmitting storage capacity information of said cache unit to said portable terminal.

45. The information supply control program as set forth in claim 42, comprising the function of after hashing, among information and identification information of the relevant information transmitted to said portable terminal, said information by using a hash function, holding the hashed information in said cache unit together with the identification information of the relevant information.

46. The information supply control program as set forth in claim 45, wherein when information to be transmitted to said portable terminal is made into a hash, if information which is hashed and which corresponds to the same identification information as identification information of said information is already held in said cache unit, said information made into a hash and said hashed information are compared and when the pieces of the information disagree with each other, said hashed information which is held in said cache unit is rewritten into said information made into a hash.

47. A portable terminal control program to be executed on a portable terminal which is connected to an information supply server through a network, which makes a request for information to said information supply server to receive supply of said requested information and which has a cache unit that holds received information and identification information for identifying the relevant information so as to be correlated with each other, which program executes:
the function of, upon receiving only identification information from said information supply server, supplying only the relevant identification information to a service supply unit which supplies an output interface with information, and
the function of, upon receiving information and identification information of the relevant information, providing said service supply unit with only the relevant identification information.

48. The portable terminal control program as set forth in claim 47, comprising the function of:
upon reception of only said identification information, obtaining information corresponding to said identification information held in said cache unit, and
upon reception of said information and identification information of the relevant information, obtaining information corresponding to said identification information from said cache unit and supplying the information to said service supply unit.

49. The portable terminal control program as set forth in claim 48, comprising the function of, upon reception of updated information corresponding to said received information and identification information of the relevant information, when information corresponding to the same identification information as said identification information is held in said cache unit, rewriting said information by said updated information.

50. The information supply system as set forth in claim 4, wherein
to information requested by said portable terminal, inconsistency detection information for confirming inconsistency between information held in the cache unit of said portable terminal and information held in the cache unit of said information supply server is applied, and
said information supply server collates said inconsistency detection information generated on said information supply server side and inconsistency detection information applied to information requested by said portable terminal to determine whether said information is already transmitted or not.

51. The information supply system as set forth in claim 50, wherein said inconsistency detection information is information which enables detection of inconsistency between information from identification information and information held in said cache unit.

52. The information supply system as set forth in claims 50 or 51, wherein
when the pieces of said inconsistency detection information fail to coincide with each other, said information requested is transmitted with a flag indicative of inconsistency added to said portable terminal, and
when said information with said flag added is transmitted, said portable terminal preserves said information in said cache unit.

53. The information supply system as set forth in claim 4, comprising:
a data server connected to said information supply server for supplying information corresponding to a request from said portable terminal, wherein
said information supply server determines
whether information obtained from said data server and information held in said cache unit coincide with each other, and
when the pieces of the information fail to coincide, holds the information obtained from said data server in said cache unit with said identification information for identifying the relevant information added.

54. The information supply system as set forth in claim 53, wherein said information determined to fail to coincide and corresponding said identification information are deleted from said cache unit.

55. The information supply system as set forth in claim 1, comprising:
a data server connected to said information supply server for supplying information corresponding to a request from said portable terminal, wherein
said information supply server orders information obtained from said data server based on a processing order at said portable terminal and transmits the ordered information to said portable terminal, and
said portable terminal processes said information in the order of reception without re-ordering said information.

56. The information supply system as set forth in claim 55, wherein
said information supply server transmits said ordered information with a flag added which indicates that the relevant information is ordered, and
said portable terminal processes said received information in the relevant order by obtaining said flag order information.

57. The information supply system as set forth in claims 55 or 56, wherein said information supply server
includes a cache unit for holding said information, and
orders information obtained from said data server based on the order of processing at said portable terminal and holds the ordered information in said cache unit.

58. The information supply server as set forth in claim 25, which
applies to information requested by said portable terminal, inconsistency detection information for confirming inconsistency between information held in said cache unit and information held in said portable terminal, and
collates said inconsistency detection information generated and inconsistency detection information applied to information requested by said portable terminal to determine whether said information is already transmitted or not.

59. The information supply server as set forth in claim 58, wherein said inconsistency detection information is information which enables detection of inconsistency between information from identification information and information held in said cache unit.

60. The information supply server as set forth in claims 58 or 59, which transmits, when said pieces of inconsistency detection information fail to coincide with each other, said information requested to said portable terminal with a flag indicative of inconsistency applied.

61. The information supply server as set forth in claim 25, which
is connected to a data server which supplies information corresponding to a request from said portable terminal,
determines whether information obtained from said data server and information held in said cache unit coincide with each other, and
when the pieces of the information fail to coincide, holds the information obtained from said data server in said cache unit with said identification information for identifying the relevant information added.

62. The information supply server as set forth in claim 61, which deletes said information determined to fail to coincide and corresponding said identification information from said cache unit.

63. The information supply server as set forth in claim 23, which
is connected to the data server which supplies information corresponding to a request from said portable terminal, and
orders information obtained from said data server based on a processing order at said portable terminal and transmits the ordered information to said portable terminal.

64. The information supply server as set forth in claim 63, which transmits said ordered information to said portable terminal with a flag added which indicates that the relevant information is ordered.

65. The information supply server as set forth in claims 63 or 64, which
includes a cache unit for holding said information, and
orders information obtained from said data server based on the order of processing at said portable terminal and holds the ordered information in said cache unit.

66. The portable terminal as set forth in claim 35, which
transmits information requested with inconsistency detection information applied for confirming inconsistency between information held in said cache unit and information held in said information supply server to said information supply server, and
when said information supply server collates said inconsistency detection information generated on said information supply server side and inconsistency detection information applied to said information requested to find that the pieces of said inconsistency information fail to coincide with each other, receives said information requested with a flag indicative of inconsistency added from said information supply server and preserves the information in said cache unit.

67. The portable terminal as set forth in claim 35, which
receives, from said information supply server, information which is obtained from a data server connected to said information supply server for supplying information corresponding to said request and is ordered based on the order of processing corresponding to said request, and
processes said information in the order of reception without re-ordering said information.

68. The portable terminal as set forth in claim 67, which
receives, from said information supply server, said ordered information with a flag indicating that the relevant information is ordered added by said information supply server, and
processes said received information in the relevant order by obtaining said flag order information.

69. The information supply control program as set forth in claim 46, wherein
to information requested by said portable terminal, inconsistency detection information is applied for confirming inconsistency between information held in the cache unit of said portable terminal and information held in the cache unit of said information supply server, and
said information supply server has the function of collating said inconsistency detection information generated on said information supply server side and inconsistency detection information applied to information requested by said portable terminal to determine whether said information is already transmitted or not.

70. The information supply control program as set forth in claim 69, wherein
when the pieces of said inconsistency detection information fail to coincide with each other, said information requested with a flag indicative of inconsistency added is transmitted to said portable terminal, and
said portable terminal has the function of, when said information with said flag added is transmitted, preserving said information in said cache unit.

71. The information supply control program as set forth in claim 46, wherein
a data server connected to said information supply server for supplying information corresponding to a request from said portable terminal is provided, and
said information supply server has the function of
determining whether information obtained from said data server and information held in said cache unit coincide with each other, and
when the pieces of the information fail to coincide, holding the information obtained from said data server in said cache unit with said identification information for identifying the relevant information added.

72. The information supply control program as set forth in claim 71, comprising the function of deleting said information determined to fail to coincide and corresponding said identification information from said cache unit.

73. The information supply control program as set forth in claim 41, wherein
a data server connected to said information supply server for supplying information corresponding to a request from said portable terminal is provided,
said information supply server has the function of ordering information obtained from said data server based on a processing order at said portable terminal and transmitting the ordered information to said portable terminal, and
said portable terminal has the function of processing said information in the order of reception without re-ordering the information.

74. The information supply control program as set forth in claim 73, wherein
said information supply server has the function of transmitting said ordered information with a flag added which indicates that the relevant information is ordered, and
said portable terminal has the function of processing said received information in the relevant order by obtaining said flag order information.

75. The information supply control program as set forth in claims 73 or 74, wherein said information supply server
includes a cache unit for holding said information, and
has the function of ordering information obtained from said data server based on the order of processing at said portable terminal and holding the ordered information in said cache unit.
